# EUROPEAN PATENT SPECIFICATION

(11) **EP 4 440 201 B1**
(45) Date of publication and mention of the grant of the patent: **25.02.2026**
(21) Application number: 22906602.2
(22) Date of filing: 14.12.2022
(51) Int. Cl.: H04W 36/36, H04W 76/10, H04W 92/20, H04W 8/26, H04W 36/00

(54) **METHOD FOR CONFIGURING DYNAMIC CELL SET, AND COMMUNICATION APPARATUS**
VERFAHREN ZUR KONFIGURATION EINES DYNAMISCHEN ZELLENSATZES UND KOMMUNIKATIONSVORRICHTUNG
PROCÉDÉ DE CONFIGURATION D'UN ENSEMBLE DE CELLULES DYNAMIQUES ET APPAREIL DE COMMUNICATION

(30) Priority: 17.12.2021 CN 202111549968
(43) Date of publication of application: 02.10.2024
(73) Proprietor: Huawei Technologies Co., Ltd., Shenzhen, Guangdong 518129 (CN)
(72) Inventor: ZHU, Yonghe, Shenzhen, Guangdong 518129 (CN); GENG, Tingting, Shenzhen, Guangdong 518129 (CN); ZENG, Yu, Shenzhen, Guangdong 518129 (CN); ZENG, Qinghai, Shenzhen, Guangdong 518129 (CN)
(74) Representative: Körber, Martin Hans
(86) International application number: PCT/CN2022/138964
(87) International publication number: WO 2023/109857

(56) References cited:
- EP-A1- 3 780 742
- WO-A1-2015/035613
- WO-A2-2020/065126
- CN-A- 112 740 754
- US-A1- 2021 368 400
- US-A1- 2021 385 708
- ZTE: "Further Discussion on CHO Preparation with Multiple Candidate Cells in the Same Target Node", vol. RAN WG3, no. Ljubljana, Slovenia; 20190826 - 20190830, 17 August 2019 (2019-08-17), XP051761803, Retrieved from the Internet <URL:http://www.3gpp.org/ftp/tsg_ran/WG3_Iu/TSGR3_105/Docs/R3-193450.zip> [retrieved on 20190817]
- QUALCOMM INCORPORATED: "Dynamic Cell Group Configuration for Remote Interference Management", 3GPP 3GPP TSG-RAN WG3 #102, R3-186462, 3 November 2018 (2018-11-03), XP051482606

## Description

### TECHNICAL FIELD

Embodiments of this application relate to the communication field, and more specifically, to a method for configuring a dynamic cell set, and a communication apparatus.

### BACKGROUND

A handover procedure may be triggered in the following two manners: an L1/L2 measurement-based handover and an L3 measurement-based handover. L1/L2 measurement is faster than L3 measurement. Therefore, a current handover procedure mainly uses the L1/L2 measurement-based handover. However, the L1/L2 measurement-based handover has a problem of poor stability. When UE is at a cell edge, a handover procedure may be frequently triggered due to inaccurate and/or unstable measurement. In the handover procedure, signaling exchange exists between the UE and a base station and between base stations. Frequent handovers of the UE cause a large quantity of signaling overheads between the UE and the base station and between the base stations.
WO2020/065126 A2 discloses technology for context preparation for consecutive conditional handovers. Similar related art is described EP 3 780 742 A1 and in ZTE: "Further Discussion on CHO Preparation with Multiple Candidate Cells in the Same Target Node", 3GPP DRAFT; R3-193450 FURTHER DISCUSSION ON CHO PREPARATION WITH MULTIPLE CANDIDATE CELLS IN THE SAME TARGET NODE V2, 3RD GENERATION PARTNERSHIP PROJECT (3GPP), MOBILE COMPETENCE CENTRE ; 650, ROUTE D, vol. RAN WG3, no. Ljubljana, Slovenia; 20190826 - 20190830 17 August 2019 (2019-08-17)

### SUMMARY

This application provides a method for configuring a dynamic cell set, and a communication apparatus, to help reduce signaling overheads caused by frequent handovers due to inaccurate and/or unstable L1/L2 measurement when a terminal is at a cell edge, save communication resources, and reduce a communication delay. The present invention is defined by the enclosed claims. In the following description, embodiments, which are not covered by the claims, are to be considered as examples necessary for understanding the invention.

According to a first aspect, a method for configuring a dynamic cell set is provided, including: A first network element sends a first request message to a second network element. The first request message is used to request to establish a connection to the second network element. A first cell group managed by the first network element and a second cell group managed by the second network element belong to a candidate cell set of a dynamic cell set DCS. The first network element receives, from the second network element, a first response message in response to the first request message.

In the foregoing technical solution, before a terminal is handed over, the first network element requests to establish the connection to the second network element to configure the dynamic cell set for the terminal. Therefore, when the terminal is handed over between the first cell group and the second cell group that are included in the dynamic cell set, a handover procedure does not need to be frequently performed, so that a problem of a large quantity of signaling overheads caused by frequent handovers and a problem of an excessively long communication delay caused by a large amount of signaling exchange can be avoided.

With reference to the first aspect, in a possible implementation of the first aspect, when the terminal is handed over between cell groups included in the DCS, context information of the terminal is separately reserved on network elements to which the cell groups in the DCS belong.

In the foregoing technical solution, when a terminal is handed over between cell groups included in the DCS, network elements to which the cell groups in the DCS belong each reserves context information of the terminal, so that when the terminal is handed over between the cell groups included in the DCS, a reserved context can be directly used, to improve a handover rate.

With reference to the first aspect, in another possible implementation of the first aspect, the first request message further indicates the second network element to establish a connection to at least one of N network elements other than the first network element. N cell groups managed by the N network elements belong to the candidate cell set. N is an integer greater than 2. The first response message indicates that the second network element is successfully connected to the at least one of N network elements other than the first network element.

In the foregoing technical solution, when the candidate cell set includes a plurality of cell groups, the first request message further indicates the second network element to establish the connection to the at least one of N network elements other than the first network element, so that the dynamic cell set including the plurality of cell groups can be established. Therefore, when the terminal is handed over between the plurality of cell groups, the problem of the large quantity of signaling overheads and the delay can be avoided.

With reference to the first aspect, in another possible implementation of the first aspect, the first request message further indicates any two of N network elements other than the first network element as a group to establish a connection. N cell groups managed by the N network elements belong to the candidate cell set. N is an integer greater than 2. The first response message indicates that at least one group of any two of the N network elements other than the first network element are successfully connected.

In the foregoing technical solution, when the candidate cell set includes a plurality of cell groups, the first request message further indicates the any two of N network elements other than the first network element as a group to establish the connection, so that the dynamic cell set including the plurality of cell groups can be established. Therefore, when the terminal is handed over between the plurality of cell groups, the problem of the large quantity of signaling overheads and the delay can be avoided.

With reference to the first aspect, in another possible implementation of the first aspect, before the first network element sends the first request message to the second network element, the first network element requests to separately establish a connection to at least one of the N network elements other than the first network element and the second network element.

In the foregoing technical solution, the first network element may configure the DCS to include more cells, and the terminal can select a target cell in a larger range, to improve selection flexibility of the terminal. In addition, the terminal can select a cell that has better signal quality, to improve communication quality of the terminal after handover.

With reference to the first aspect, in another possible implementation of the first aspect, the first network element is successfully connected to the second network element. The first network element requests to establish a connection to the at least one network element.

With reference to the first aspect, in another possible implementation of the first aspect, the first network element is successfully connected to the second network element. The first network element requests to separately establish a connection to at least one network element, other than the second network element, in the at least one group of network elements that are successfully connected.

In the foregoing technical solution, the first network element does not separately establish a connection to network elements to which all cells in the candidate cell set belong, but selectively establishes only a necessary connection, so that the signaling overheads can be further reduced.

With reference to the first aspect, in another possible implementation of the first aspect, any two of K network elements are successfully connected. The K network elements include the first network element. The K network elements belong to the N network elements. The first network element sends DCS configuration information to the terminal. The DCS configuration information includes a cell-radio network temporary identifier C-RNTI configured for the terminal by another network element in the K network elements other than the first network element.

In the foregoing technical solution, a network element to which each cell group in the DCS belongs configures a C-RNTI for the terminal in advance, and the terminal may directly use the configured C-RNTI in a subsequent handover procedure, to prevent the network element to which each cell group in the DCS belongs from frequently reconfiguring a C-RNTI for the terminal. Therefore, the signaling overheads can be reduced and the handover rate can be improved.

With reference to the first aspect, in another possible implementation of the first aspect, the first network element separately sends, to the another network element in the K network elements other than the first network element, a second notification message used to notify to delete a fourth network element. A fourth cell group managed by the fourth network element belongs to the DCS. Signal quality of the fourth cell group is less than a first threshold.

In the foregoing technical solution, when the fourth cell group managed by the fourth network element belongs to the DCS but the signal quality is less than the first threshold, the first network element may separately notify a network element to which another cell group in the DCS belongs to delete related information of the fourth network element, to ensure signal quality of the cell in the DCS. Therefore, the terminal can select a more appropriate target cell from an updated DCS, to improve a handover success rate.

With reference to the first aspect, in another possible implementation of the first aspect, the first network element separately sends, to the another network element in the K network elements other than the first network element, a second notification message used to indicate to establish a connection to a fourth network element. A fourth cell group managed by the fourth network element does not belong to the DCS. Signal quality of the fourth cell group is greater than or equal to a first threshold.

In the foregoing technical solution, when the fourth cell group managed by the fourth network element does not belong to the DCS but the signal quality is greater than or equal to the first threshold, the first network element may separately notify a network element to which another cell group in the DCS belongs to separately establish a connection to the fourth network element, in other words, the first network element may add, to the DCS, a cell whose signal quality exceeds the first threshold. Therefore, the terminal can select a more appropriate target cell from an updated DCS, to improve a handover success rate.

With reference to the first aspect, in another possible implementation of the first aspect, the first network element sends, to a third network element, a second notification message used to notify to delete a fourth network element. The third network element is any one of the K network elements other than the first network element. A fourth cell group managed by the fourth network element belongs to the DCS. Signal quality of the fourth cell group is less than a first threshold. The second notification message further indicates the third network element to separately send, to another network element in the K network elements other than the first network element and the third network element, a third notification message used to notify to delete the fourth network element.

In the foregoing technical solution, when the fourth cell group managed by the fourth network element belongs to the DCS but the signal quality is less than the first threshold, the first network element may notify a network element to which any cell group in the DCS belongs, and indicate the network element to separately notify a network element to which another cell group in the DCS belongs to delete related information of the fourth network element, to ensure signal quality of the cell in the DCS. Therefore, the terminal can select a more appropriate target cell from an updated DCS, to improve a handover success rate.

With reference to the first aspect, in another possible implementation of the first aspect, the first network element sends, to a third network element, a second notification message used to indicate to establish a connection to a fourth network element. The third network element is any one of the K network elements other than the first network element. A fourth cell group managed by the fourth network element does not belong to the DCS. Signal quality of the fourth cell group is greater than or equal to a first threshold. The second notification message further indicates the third network element to separately send, to another network element in the K network elements other than the first network element and the third network element, a third notification message used to indicate to establish a connection to the fourth network element.

In the foregoing technical solution, when the fourth cell group managed by the fourth network element does not belong to the DCS but the signal quality is greater than or equal to the first threshold, the first network element may notify a network element to which any cell group in the DCS belongs, and indicate the network element to separately notify a network element to which another cell group in the DCS belongs to separately establish a connection to the fourth network element, in other words, the first network element may add, to the DCS, a cell whose signal quality exceeds the first threshold. Therefore, the terminal can select a more appropriate target cell from an updated DCS, to improve a handover success rate.

With reference to the first aspect, in another possible implementation of the first aspect, the first network element sends, to a core network element, identification information of the cell group included in the DCS or first DCS indication information. The first DCS indication information indicates the core network element to maintain a connection to the first network element when the terminal is handed over between the cell groups included in the DCS. The first DCS indication information indicates the core network element to maintain, when the terminal is handed over between the cell groups included in the DCS, a connection to the network element to which the cell group included in the DCS belongs.

In the foregoing technical solution, the core network element maintains the connection to the network element to which each cell group in the DCS belongs, so that a problem that the connection between the core network element and the network element to which each cell group in the DCS belongs is frequently disconnected/established due to a serving cell change can be reduced.

With reference to the first aspect, in another possible implementation of the first aspect, the first response message includes a C-RNTI configured by the second network element for the terminal. The first network element sends DCS configuration information to the terminal. The DCS configuration information includes the C-RNTI configured by the second network element for the terminal.

With reference to the first aspect, in another possible implementation of the first aspect, the first network element receives a measurement report sent by the terminal. The measurement report includes signal quality of M cell groups. M is a positive integer. The N cell groups belong to the M cell groups. When signal quality of the N cell groups satisfies the first threshold, the first network element adds the N cell groups to the candidate cell set. N is a positive integer less than or equal to M.

In the foregoing technical solution, the first network element adds, to the candidate cell set, the cell group whose signal quality satisfies the first threshold, in other words, signal quality of all the cells in the DCS satisfies the first threshold, so that the terminal can select an appropriate target cell, to ensure communication quality when the terminal is handed over between the cells included in the DCS.

According to a second aspect, a method for configuring a dynamic cell set is provided, including: A second network element receives a first request message from a first network element. The first request message is used to request to establish a connection to the second network element. A first cell group managed by the first network element and a second cell group managed by the second network element belong to a candidate cell set of a dynamic cell set DCS. The second network element sends, to the first network element, a first response message in response to the first request message.

With reference to the second aspect, in a possible implementation of the second aspect, when a terminal is handed over between cell groups included in the DCS, context information of the terminal is separately reserved on network elements to which the cell groups in the DCS belong.

With reference to the second aspect, in another possible implementation of the second aspect, the first request message further indicates the second network element to establish a connection to at least one of N network elements other than the first network element. N cell groups managed by the N network elements belong to the candidate cell set. N is an integer greater than 2. The first response message indicates that the second network element is successfully connected to the at least one of N network elements other than the first network element.

With reference to the second aspect, in another possible implementation of the second aspect, the first request message further indicates any two of N network elements other than the first network element as a group to establish a connection. N cell groups managed by the N network elements belong to the candidate cell set. N is an integer greater than 2. The first response message further indicates that at least one group of any two of the N network elements other than the first network element are successfully connected.

With reference to the second aspect, in another possible implementation of the second aspect, the second network element sends a first notification message to a core network element. The first notification message is used to notify the core network element to establish a connection to the second network element and deactivate the connection. The second network element receives, from the core network element, a first notification acknowledgment message in response to the first notification message.

In the foregoing technical solution, the core network element establishes a connection to the second network element. The core network element may establish, for the terminal, context information about handover between the first network element and the second network element. The first network element may perform data transmission and signaling transmission with the core network element by using the connection.

With reference to the second aspect, in another possible implementation of the second aspect, the first notification acknowledgment message includes a next hop NH parameter and a next hop chaining counter NCC parameter.

In the foregoing technical solution, the core network element remains the NH parameter and the NCC parameter in the DCS unchanged, to ensure that when the terminal is handed over between the cell groups included in the DCS, encryption and integrity verification keys of the terminal and a base station to which a target cell belongs are the same.

For specific details and beneficial effects of the implementations provided in the second aspect, refer to the foregoing descriptions of the implementations of the first aspect. Details are not described again in the second aspect.

According to a third aspect, a method for configuring a dynamic cell set is provided, including: A core network element receives a first notification message sent by a second network element. The first notification message is used to notify the core network element to establish a connection to the second network element and deactivate the connection. The core network element sends, to the second network element, a first notification acknowledgment message in response to the first notification message.

With reference to the third aspect, in a possible implementation of the third aspect, the first notification acknowledgment message includes a next hop NH parameter and a next hop chaining counter NCC parameter.

With reference to the third aspect, in another possible implementation of the third aspect, the core network element receives, from a first network element, identification information of a cell group included in a DCS or first DCS indication information. The first DCS indication information indicates the core network element to maintain a connection to the first network element when a terminal is handed over between cell groups included in the DCS. The first DCS indication information indicates the core network element to maintain, when the terminal is handed over between the cell groups included in the DCS, a connection to a network element to which the cell group included in the DCS belongs.

For specific details and beneficial effects of the implementations provided in the third aspect, refer to the foregoing descriptions of the implementations of the first aspect and the second aspect. Details are not described again in the third aspect.

According to a fourth aspect, a communication apparatus is provided, including: a receiving unit, configured to send a first request message to a second network element. The first request message is used to request to establish a connection to the second network element. A first cell group managed by the communication apparatus and a second cell group managed by the second network element belong to a candidate cell set of a dynamic cell set DCS. The apparatus includes a sending unit, configured to receive, from the second network element, a first response message in response to the first request message.

With reference to the fourth aspect, in a possible implementation of the fourth aspect, when a terminal is handed over between cell groups included in the DCS, context information of the terminal is separately reserved on network elements to which the cell groups in the DCS belong.

With reference to the fourth aspect, in another possible implementation of the fourth aspect, the first request message further indicates the second network element to establish a connection to at least one of N network elements other than the communication apparatus. N cell groups managed by the N network elements belong to the candidate cell set. N is an integer greater than 2. The first response message indicates that the second network element is successfully connected to the at least one of N network elements other than the communication apparatus.

With reference to the fourth aspect, in another possible implementation of the fourth aspect, the first request message further indicates any two of N network elements other than the communication apparatus as a group to establish a connection. N cell groups managed by the N network elements belong to the candidate cell set. N is an integer greater than 2. The first response message indicates that at least one group of any two of the N network elements other than the communication apparatus are successfully connected.

With reference to the fourth aspect, in another possible implementation of the fourth aspect, the sending unit is further configured to separately send a message for requesting to establish a connection to at least one of the N network elements other than the communication apparatus and the second network element.

With reference to the fourth aspect, in another possible implementation of the fourth aspect, the sending unit is further configured to separately send a message for requesting to establish a connection to the at least one network element.

With reference to the fourth aspect, in another possible implementation of the fourth aspect, the sending unit is further configured to separately send a message for requesting to establish a connection to at least one network element, other than the second network element, in the at least one group of network elements that are successfully connected.

With reference to the fourth aspect, in another possible implementation of the fourth aspect, the sending unit is further configured to send DCS configuration information to the terminal. The DCS configuration information includes a C-RNTI configured for the terminal by another network element in the K network elements other than the communication apparatus.

With reference to the fourth aspect, in another possible implementation of the fourth aspect, the sending unit is further configured to separately send, to the another network element in the K network elements other than the communication apparatus, a second notification message used to notify to delete a fourth network element. A fourth cell group managed by the fourth network element belongs to the DCS. Signal quality of the fourth cell group is less than a first threshold.

With reference to the fourth aspect, in another possible implementation of the fourth aspect, the sending unit is further configured to separately send, to the another network element in the K network elements other than the communication apparatus, a second notification message used to indicate to establish a connection to a fourth network element. A fourth cell group managed by the fourth network element does not belong to the DCS. Signal quality of the fourth cell group is greater than or equal to a first threshold.

With reference to the fourth aspect, in a possible implementation of the fourth aspect, the sending unit is further configured to send, to a third network element, a second notification message used to notify to delete a fourth network element. The third network element is any one of the K network elements other than the communication apparatus. A fourth cell group managed by the fourth network element belongs to the DCS. Signal quality of the fourth cell group is less than a first threshold. The second notification message further indicates the third network element to separately send, to another network element in the K network elements other than the communication apparatus and the third network element, a third notification message used to notify to delete the fourth network element.

With reference to the fourth aspect, in another possible implementation of the fourth aspect, the sending unit is further configured to send, to a third network element, a second notification message used to indicate to establish a connection to a fourth network element. The third network element is any one of the K network elements other than the communication apparatus. A fourth cell group managed by the fourth network element does not belong to the DCS. Signal quality of the fourth cell group is greater than or equal to a first threshold. The second notification message further indicates the third network element to separately send, to another network element in the K network elements other than the communication apparatus and the third network element, a third notification message used to indicate to establish a connection to the fourth network element.

With reference to the fourth aspect, in another possible implementation of the fourth aspect, the sending unit is further configured to send, to a core network element, identification information of the cell group included in the DCS or first DCS indication information. The first DCS indication information indicates the core network element to maintain a connection to the communication apparatus when the terminal is handed over between the cell groups included in the DCS. The first DCS indication information indicates the core network element to maintain, when the terminal is handed over between the cell groups included in the DCS, a connection to the network element to which the cell group included in the DCS belongs.

With reference to the fourth aspect, in another possible implementation of the fourth aspect, the first response message includes a cell-radio network temporary identifier C-RNTI configured by the second network element for the terminal. The sending unit is further configured to send DCS configuration information to the terminal. The DCS configuration information includes the C-RNTI configured by the second network element for the terminal.

With reference to the fourth aspect, in another possible implementation of the fourth aspect, the receiving unit is further configured to receive a measurement report sent by the terminal. The measurement report includes signal quality of M cell groups. M is a positive integer. The N cell groups belong to the M cell groups. The communication apparatus further includes a processing unit. When signal quality of the N cell groups satisfies the first threshold, the processing unit is configured to add the N cell groups to the candidate cell set. N is a positive integer less than or equal to M.

According to a fifth aspect, a communication apparatus is provided, including: a receiving unit, configured to receive a first request message from a first network element. The first request message is used to request to establish a connection to the communication apparatus. A first cell group managed by the first network element and a second cell group managed by the communication apparatus belong to a candidate cell set of a dynamic cell set DCS. The apparatus includes a sending unit, configured to send, to the first network element, a first response message in response to the first request message.

With reference to the fifth aspect, in a possible implementation of the fifth aspect, the first request message further indicates the communication apparatus to establish a connection to at least one of N network elements other than the first network element. N cell groups managed by the N network elements belong to the candidate cell set. N is an integer greater than 2. The first response message indicates that the communication apparatus is successfully connected to the at least one of N network elements other than the first network element.

With reference to the fifth aspect, in another possible implementation of the fifth aspect, the first request message further indicates any two of N network elements other than the first network element as a group to establish a connection. N cell groups managed by the N network elements belong to the candidate cell set. N is an integer greater than 2. The first response message further indicates that at least one group of any two of the N network elements other than the first network element are successfully connected.

With reference to the fifth aspect, in another possible implementation of the fifth aspect, the sending unit is further configured to send a first notification message to a core network element. The first notification message is used to notify the core network element to establish a connection to the second network element and deactivate the connection. The receiving unit is further configured to receive, from the core network element, a first notification acknowledgment message in response to the first notification message.

With reference to the fifth aspect, in another possible implementation of the fifth aspect, the first notification acknowledgment message includes a next hop NH parameter and a next hop chaining counter NCC parameter.

According to a sixth aspect, a communication apparatus is provided, including: a receiving unit, configured to receive a first notification message sent by a second network element. The first notification message is used to notify the communication apparatus to establish a connection to the second network element and deactivate the connection. The apparatus includes a sending unit, configured to send, to the second network element, a first notification acknowledgment message in response to the first notification message.

With reference to the sixth aspect, in a possible implementation of the sixth aspect, the first notification acknowledgment message includes a next hop NH parameter and a next hop chaining counter NCC parameter.

With reference to the sixth aspect, in another possible implementation of the sixth aspect, the receiving unit is further configured to receive, from a first network element, identification information of a cell group included in a DCS or first DCS indication information. The first DCS indication information indicates the communication apparatus to maintain a connection to the first network element when a terminal is handed over between cell groups included in the DCS. The first DCS indication information indicates the communication apparatus to maintain, when the terminal is handed over between the cell groups included in the DCS, a connection to a network element to which the cell group included in the DCS belongs.

According to a seventh aspect, a communication apparatus is provided, including a processor. The processor is coupled to a memory. The memory is configured to store a program or instructions. When the program or the instructions are executed by the processor, the communication apparatus is enabled to implement any one of the possible implementations of the first aspect to the third aspect.

According to an eighth aspect, a computer storage medium is provided, including computer instructions. When the computer instructions are run on an electronic device, the electronic device is enabled to implement any one of the possible implementations of the first aspect to the third aspect.

According to a ninth aspect, a computer program product is provided. When the computer program product runs on an electronic device, the electronic device is enabled to implement any one of the possible implementations of the first aspect to the third aspect.

### BRIEF DESCRIPTION OF DRAWINGS

FIG. 1 is a diagram of an application scenario according to this application;
FIG. 2 is a diagram of a method for configuring a dynamic cell set according to an embodiment of this application;
FIG. 3 is a diagram of another method for configuring a dynamic cell set according to an embodiment of this application;
FIG. 4 is a diagram of another method for configuring a dynamic cell set according to an embodiment of this application;
FIG. 5 is a diagram of another method for configuring a dynamic cell set according to an embodiment of this application;
FIG. 6 is a diagram of another method for configuring a dynamic cell set according to an embodiment of this application;
FIG. 7 is a diagram of another method for configuring a dynamic cell set according to an embodiment of this application;
FIG. 8 is a diagram of another method for configuring a dynamic cell set according to an embodiment of this application;
FIG. 9 is a diagram of another method for configuring a dynamic cell set according to an embodiment of this application;
FIG. 10 is a diagram of another method for configuring a dynamic cell set according to an embodiment of this application;
FIG. 11 is a diagram of another method for configuring a dynamic cell set according to an embodiment of this application;
FIG. 12 is a diagram of another method for configuring a dynamic cell set according to an embodiment of this application;
FIG. 13 is a diagram of another method for configuring a dynamic cell set according to an embodiment of this application;
FIG. 14 is a diagram of another method for configuring a dynamic cell set according to an embodiment of this application;
FIG. 15 is a block diagram of a communication apparatus according to an embodiment of this application; and
FIG. 16 is a diagram of a structure of a communication apparatus according to an embodiment of this application.

### DESCRIPTION OF EMBODIMENTS

The following describes the technical solutions of this application with reference to the accompanying drawings.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "example" or "for example" are used to represent giving an example, an illustration, or a description. Any embodiment or design scheme described as an "example" in this application should not be explained as being more preferred or having more advantages than another embodiment or design scheme. Specifically, the term "example" is used to present a concept in a specific manner.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of new service scenarios, the technical solutions provided in embodiments of this application are also applicable to similar technical problems.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

A terminal device in embodiments of this application may also be referred to as user equipment (user equipment, UE), a mobile terminal (mobile terminal, MT), an access terminal, a subscriber unit, a subscriber station, a mobile station (mobile station, MS), a remote station, a remote terminal, a mobile device, a user terminal, a terminal, a wireless communication device, a user agent, or a user apparatus. The terminal device in embodiments of this application may be a mobile phone (mobile phone), a tablet computer (tablet computer), a mobile internet device (mobile internet device, MID), a wearable device, a computer with a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. A terminal device with a wireless transceiver function and a chip that can be disposed in the terminal device are collectively referred to as a terminal device in this application.

It should be understood that the technical solutions in embodiments of this application may be applied to various communication systems, such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, or new radio (new radio, NR) system.

An access network device in embodiments of this application may be a device configured to communicate with the terminal device. The access network device in embodiments of this application is also referred to as a base station, and may be a base transceiver station (base transceiver station, BTS) or a base station controller (base station controller, BSC) in a GSM system or a CDMA system, a NodeB (NodeB, NB) or a radio network controller (radio network controller, RNC) in a WCDMA system, an evolved NodeB (evolved NodeB, eNB, or eNodeB) in an LTE system, a home base station (for example, a home evolved NodeB, or a home NodeB, HNB), or a radio controller in a cloud radio access network (cloud radio access network, CRAN) scenario. Alternatively, the access network device may be a relay station, an access point, a vehicle-mounted device, a wearable device, a radio access network device (for example, a gNB) in a 5G network, a future evolved radio access network device, or one or a group (including a plurality of antenna panels) of antenna panels of a base station in a 5G system. Alternatively, the access network device may be a network node that forms a gNB or a transmission point, for example, a baseband unit (baseband unit, BBU) or a distributed unit (distributed unit, DU). This is not limited in embodiments of this application.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer eventually becomes information at the PHY layer, or is converted from information at the PHY layer. Therefore, in the architecture, higher layer signaling such as RRC layer signaling may also be considered as being sent by the DU or sent by the DU and the AAU. It may be understood that the radio access network device may be a device including one or more of a CU node, a DU node, and an AAU node. In addition, the CU may be classified as a radio access network device in a radio access network (radio access network, RAN), or the CU may be classified as a radio access network device in a core network (core network, CN). This is not limited in this application.

A core network device is a device that is in a core network (core network, CN) and that provides service support for a terminal. Currently, some examples of the core network device are: an access and mobility management function (access and mobility management function, AMF) entity, a session management function (session management function, SMF) entity, a user plane function (user plane function, UPF) entity, and the like. The AMF entity may be responsible for access management and mobility management of the terminal. The SMF entity may be responsible for session management, for example, user session establishment. The UPF entity may be a functional entity on a user plane, and is mainly responsible for connecting to an external network. It should be noted that an entity in embodiments of this application may also be referred to as a network element or a functional entity. For example, the AMF entity may also be referred to as an AMF network element or an AMF functional entity. For another example, the SMF entity may also be referred to as an SMF network element or an SMF functional entity.

In embodiments of this application, the terminal device or the radio access network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not specifically limited in embodiments of this application provided that a program that records code for the method provided in embodiments of this application can be run to perform communication according to the method provided in embodiments of this application. For example, the execution body of the method provided in embodiments of this application may be a terminal device, a radio access network device, or a functional module that is in a terminal device or a radio access network device and that can invoke and execute the program.

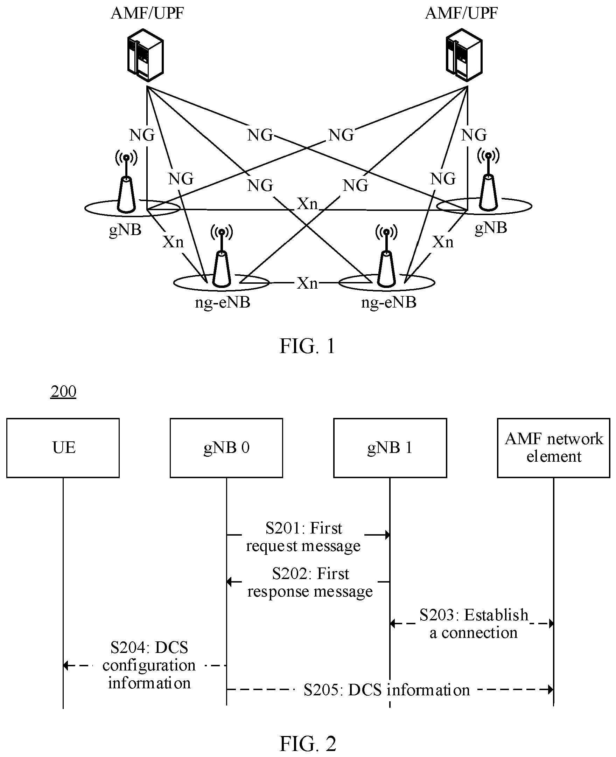

FIG. 1 is a diagram of an application scenario according to an embodiment of this application. As shown in FIG. 1, gNBs are connected through Xn interfaces. The gNB is connected to a 5G core network through an NG interface.

FIG. 2 to FIG. 14 are flowcharts of methods for configuring dynamic cell sets (dynamic cell sets, DCSs) according to embodiments of this application. It should be understood that these steps or operations are merely examples, and other operations or variations of the operations in FIG. 2 to FIG. 14 may also be performed in embodiment of this application. In addition, the steps in FIG. 2 to FIG. 14 may be performed in a sequence different from that presented in FIG. 2 to FIG. 14, and it is possible that not all operations in FIG. 2 to FIG. 14 need to be performed. The dynamic cell set in embodiments of this application is a set of at least two cells or cell groups. Embodiments of this application are described by using a cell as an example. Cells in the DCS are respectively managed by base stations to which the cells belong. For example, a gNB 0 manages a cell 0, a gNB 1 manages a cell 1, a gNB 2 manages a cell 2, a gNB 3 manages a cell 3, a gNB 4 manages a cell 4, and so on. Base stations to which all cells in the DCS belong respectively configure cell-radio network temporary identifiers (cell-radio network temporary identifiers, C-RNTIs) for a terminal. When the terminal is handed over between any two cells in the DCS, the base stations to which all the cells in the DCS belong reserve context information of the terminal. Only one cell in the dynamic cell set is activated each time, in other words, signaling and/or data related to the terminal is sent only to a base station to which the activated cell belongs, and the activated cell is referred to as a serving cell of UE. The terminal accesses only the base station to which the activated cell belongs, and the base station is referred to as a serving base station of the UE. The cells are not classified into a primary cell and a secondary cell. In the methods provided in embodiments of this application, a current serving cell of the terminal is the cell 0. Correspondingly, a current serving base station of the UE is the gNB 0 to which the cell 0 belongs. The gNB 0 establishes a candidate cell set of the DCS, filters cells in the candidate cell set by establishing a connection to a base station to which the cell in the candidate cell set belongs, and adds some or all cells in the candidate cell set to the DCS based on whether the connection is successfully or not successfully established, to configure the DCS for the terminal. A base station (namely, the gNB 0) that configures the DCS for the terminal is referred to as a primary base station, and a base station to which a cell in the candidate cell set other than the cell 0 belongs is referred to as a secondary base station. Optionally, the candidate cell set includes information about a candidate cell, for example, an identifier of the candidate cell or index information of the candidate cell. Optionally, the candidate cell set is a cell list.

A method 200, a method 300, and a method 400 are described by using an example in which a first network element is a gNB 0, a second network element is a gNB 1, and a core network element is an AMF network element. It should be understood that the example in which the first network element is the gNB 0, the second network element is the gNB 1, and the core network element is the AMF network element is merely used to help a person skilled in the art better understand solutions of this application, and should not be construed as a limitation on this application.

FIG. 2 is described by using an example in which a candidate cell set of a DCS includes a cell 0 and a cell 1. Signal quality of all cells in the candidate cell set satisfies a quality threshold set by the gNB 0. Optionally, the gNB 0 may obtain signal quality of a current serving cell (the cell 0) and neighboring cells (for example, the cell 1, a cell 2, and a cell 3) based on a measurement report periodically reported by the UE, to add a cell whose signal quality satisfies the quality threshold to the candidate cell set of the DCS.

The signal quality of the cell may include at least one of received signal code power (received signal code power, RSCP), reference signal received power (reference signal received power, RSRP), reference signal received quality (reference signal received quality, RSRQ), a signal-to-noise ratio (signal-to-noise ratio, SNR), a signal-to-interference-plus-noise ratio (signal-to-interference-plus-noise ratio, SINR), a reference signal strength indicator (reference signal strength indicator, RSSI), or other signal quality. The signal quality of the cell may be at least one of a cell level, a beam level, a channel state information reference signal (channel state information reference signal, CSI-RS) level, a numerology (numerology) level, a slice (slice) level, or a bandwidth part (bandwidth part, BWP) level. Beam-level signal quality may be at a synchronization signal/physical broadcast channel block (synchronization signal/physical broadcast channel block, SSB) level. The signal quality of the cell may be obtained by measuring at least one of a downlink synchronization channel, a channel state information reference signal, a demodulation reference signal (demodulation reference signal, DMRS), a cell-specific reference signal (cell-specific reference signal, CRS) signal, a synchronization signal/physical broadcast channel block, or another downlink signal. It should be understood that, if signal quality information of the cell belongs to one or more of the beam level, the numerology level, the slice level, or the bandwidth part level, information about the cell may further include at least one of a corresponding beam, channel state information reference signal, numerology, slice, or identification information of a bandwidth part.

S201: The gNB 0 sends a first request message to the gNB 1.

The first request message may be a DCS handover request (DCS HANDOVER REQUEST) message. The first request message is used to request to establish a connection to the gNB 1. Optionally, the first request message includes second DCS indication information. The second DCS indication information may include at least one of a type (the DCS or another type) of connection establishment, index information (set index) of the cell 1 in the candidate cell set, or the like. The second DCS indication information may indicate the gNB 1 to reserve a C-RNTI for UE. Further, when the gNB 0 is successfully connected to the gNB 1, the second DCS indication information may indicate the gNB 1 to request to establish a DCS-type connection to the AMF network element, in other words, establish a connection between the AMF network element and the gNB 1 and deactivate the connection. When the gNB 0 adds the cell 0 to the DCS and the UE is handed over from the cell 0 to the cell 1, the second DCS indication information may further indicate the gNB 1 not to send, to the gNB 0, information that indicates to release context information of the UE. The first request message further includes at least one of an ID of the cell 1, KgNB* (used to generate a key for air interface encryption and integrity protection), a C-RNTI configured by the gNB 0 for the UE, and the context information of the UE.

S202: The gNB 1 sends, to the gNB 0, a first response message in response to the first request message.

Optionally, when the gNB 0 is not successfully connected to the gNB 1, the gNB 1 does not send the first response message. Optionally, the first response message may include a bit that indicates whether the gNB 0 is successfully connected to the gNB 1. When the first response message indicates that the gNB 1 is not successfully connected to the gNB 0, the first response message may be a DCS handover failure (DCS HANDOVER FAILURE) message. In this case, the gNB 0 deletes the cell 1 from the candidate cell set. When the first response message indicates that the gNB 0 is successfully connected to the gNB 1, the first response message may be a DCS handover acknowledge (DCS HANDOVER ACKNOWLEDGE) message. The first response message needs to include at least the C-RNTI configured by the gNB 1 for the UE, and the C-RNTI may be a cell-level C-RNTI or a cell pair-level C-RNTI. For example, the DCS includes the cell 0, the cell 1, and the cell 2, and a target cell is the cell 1. Information about the cell pair-level C-RNTI may include a C-RNTI 1-0 of the UE accessing the cell 1 from the cell 0, and a C-RNTI 1-2 of the UE accessing the cell 1 from the cell 2. Different cell pair-level C-RNTIs are configured for the UE, and the gNB 1 may determine, based on the C-RNTI of the UE accessing the cell 1, whether a previous serving cell of the UE is the cell 0 (C-RNTI 1-0) or the cell 2 (C-RNTI 1-2). Optionally, the first response message may further include random access channel (random access channel, RACH) information configured by the gNB 1 for the UE. The RACH information includes at least one of the following information: a preamble (preamble) indication, an SSB, a group of dedicated RACH resources, association information between an RACH resource and an SSB, association information between an RACH resource and a UE-specific CSI-RS configuration, and a common RACH resource. Optionally, the RACH information may be cell-level RACH information or cell pair-level RACH information. For example, the DCS includes the cell 0, the cell 1, and the cell 2, and the target cell is the cell 1. The cell pair-level RACH information may include RACH information of the UE accessing the cell 1 from the cell 0, and RACH information of the UE accessing the cell 1 from the cell 2. Different RACH information is configured for the UE, and the cell 1 may determine, based on the RACH information of the UE accessing the cell 1, whether a previous serving cell of the UE is the cell 0 or the cell 2.

Before the UE is handed over, the gNB 0 requests to establish the connection to the gNB 1 to configure the DCS for the terminal. When the UE is frequently handed over between the cell 0 and the cell 1 that are included in the DCS, a handover procedure does not need to be frequently performed, so that a problem of a large quantity of signaling overheads caused by frequent handovers and a problem of an excessively long communication delay caused by a large amount of signaling exchange can be avoided.

Optionally, when the first response message indicates that the gNB 0 is successfully connected to the gNB 1, the method 200 further includes S204: The gNB 0 sends DCS configuration information to the UE.

The DCS configuration information includes the following information:
(1) Third DCS indication information: The third DCS indication information may indicate that a type of configuration information is a DCS type. The UE may determine, based on the third DCS indication information, that the configuration information is the DCS type, and the UE does not need the gNB 0 to select, for the UE, a target cell for handover;
(2) C-RNTI configured by a base station to which a cell in the DCS belongs for the UE: The C-RNTI may be a cell-level C-RNTI or a cell pair-level C-RNTI; and
(3) Selection criterion for a target cell: When signal quality of a cell satisfies the selection criterion, the UE determines the cell as the target cell, and accesses a base station to which the target cell belongs. When signal quality of a plurality of cells satisfies the selection criterion, the UE determines a cell that has best signal quality in the plurality of cells as the target cell, and accesses a base station to which the target cell belongs. For example, the selection criterion may include a signal quality threshold. Optionally, the selection criterion further includes a measurement type. For example, the selection criterion may indicate whether the selection criterion is determined based on an L1/L2 measurement result or an L3 measurement result.

Optionally, the DCS configuration information further includes RACH information. The RACH information may be cell-level RACH information, or cell pair-level RACH information.

The gNB 0 sends the DCS configuration information to the UE, and the UE may determine, based on signal quality of a cell and the DCS configuration information, the target cell for handover, and initiate a random access request to a base station to which the target cell belongs. In other words, the UE does not need to perform a handover procedure.

Optionally, the method 200 further includes S203: The gNB 1 establishes the connection to the AMF network element.

Specifically, the gNB 1 sends a first notification message to the AMF network element. The first notification message is used to notify the AMF network element to establish the connection to the gNB 1 and deactivate the connection. In a possible implementation, the first notification message may include a bit that indicates to deactivate the connection between the AMF network element and the gNB 1.

For example, the gNB 1 sends a path switch request (PATH SWITCH REQUEST) message to the AMF network element, to notify the AMF network element that the UE has moved to the cell 1 to establish an NG connection between the AMF network element and the gNB 1. Optionally, the message may include fourth DCS indication information. The fourth DCS indication information may include at least one of information that indicates an access type (DCS or another type), index information of the cell 1 in the candidate cell set, source cell indication information, a deactivation indication of an NG connection corresponding to the target cell, and the like. The source cell indication information may include at least one of a source cell identifier, interface identification information (source NG-RAN node UE XnAP ID) of the UE at a source base station, and cell pair information. The AMF network element determines, based on the fourth DCS indication information, whether the cell 0 and the cell 1 belong to a same DCS. If the cell 0 and the cell 1 belong to the same DCS, the NG connection between the AMF network element and the gNB 1 is established, and the NG connection between the AMF network element and the gNB 1 is deactivated. When the UE is handed over between cells in the DCS, the AMF network element maintains the NG connection to the gNB 1. Deactivation indication information of the NG connection corresponding to the target cell more directly indicates the AMF network element to establish the NG connection to the gNB 1 and deactivate the connection, and is only context information that corresponds to connections of the cell 0 and the cell 1 and that is established by the UE on the gNB 1. For example, in this case, a serving base station of the UE is the gNB 0. Although the connection has been established between the gNB 1 and the AMF network element, the AMF network element still sends UE-related signaling and/or data to the gNB 0, but does not send the signaling and/or data to the gNB 1, in other words, the NG connection between the gNB 1 and the AMF network element is deactivated.

The AMF network element sends a first notification acknowledgment message to the gNB 1. The first notification acknowledgment message may be a path switch acknowledge (PATH SWITCH ACKNOWLEDGE) message. Optionally, if the AMF network element determines that the cell 0 and the cell 1 belong to the same DCS, in a possible implementation, the AMF network element indicates, in the first notification acknowledgment message, a next hop (next hop, NH) parameter and a next hop chaining counter (next hop chaining counter, NCC) parameter that are the same as those of the gNB 0. The NCC and the NH are used to generate a key for encryption and integrity verification. In other words, the AMF network element may maintain a same key used by base stations to which the cells in the DCS belong.

Optionally, the method 200 further includes S205: The gNB 0 sends DCS information to the AMF network element. The DCS information may include first DCS indication information and/or information about the cells in the DCS. In a possible implementation, if the gNB 1 has performed S203, the first DCS indication information indicates the AMF network element to maintain a connection between the AMF network element and the gNB 0 when the UE is handed over between the cells in the DCS. In another possible implementation, if the gNB 1 does not perform S203, the first DCS indication information indicates the AMF network element to maintain the connection between the AMF network element and the gNB 1 and a connection between the AMF network element and the gNB 0 when the UE is handed over between the cells in the DCS.

In the foregoing technical solution, when the UE is handed over between the cells included in the DCS, the AMF network element maintains connections to base stations to which all cells in the DCS belong, so that a problem that the connection between the AMF network element and the base station is frequently disconnected/established can be avoided.

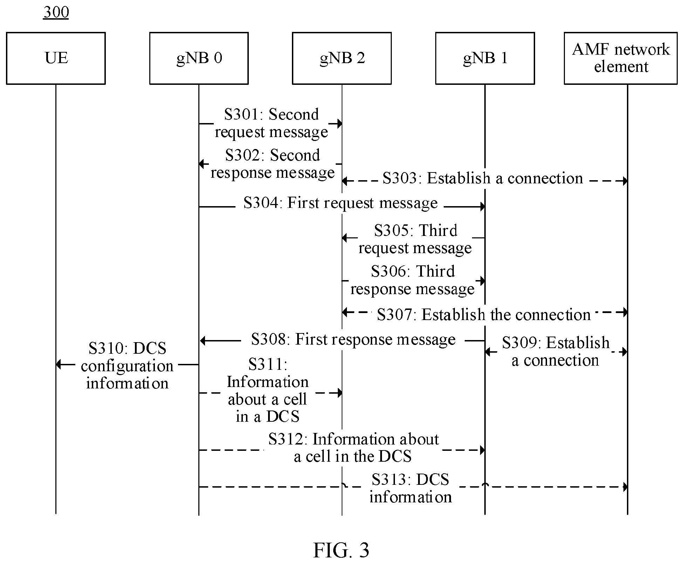

The foregoing describes a case in which the candidate cell set includes only the cell 1 in addition to the cell 0. It should be understood that the candidate cell set may include two or more cells in addition to the cell 0. In this case, embodiments of this application provide two methods for configuring a dynamic cell set DCS. The following uses FIG. 3 to FIG. 12 as examples for description.

In methods provided in FIG. 3 to FIG. 5, a primary base station gNB 0 first separately establishes a connection to base stations to which cells in a candidate cell set other than a cell 0 belong, and then a connection between the base stations to which the cells in the candidate cell set other than the cell 0 belong is established.

FIG. 3 is described by using an example in which signal quality of a cell 1 and a cell 2 exceeds a quality threshold. Because the signal quality of the cell 1 and the cell 2 exceeds the quality threshold, the gNB 0 adds, to the candidate cell set, the cell 1 and the cell 2 that are respectively managed by a gNB1 and a gNB2.

S301: The gNB 0 sends a second request message to the gNB 2.

Refer to S201. Details are not described herein again.

S302: The gNB 2 sends, to the gNB 0, a second response message in response to the second request message.

Refer to S202. Details are not described herein again.

It should be understood that, when the gNB 0 is not successfully connected to the gNB 2, the gNB 0 deletes the cell 2 from the candidate cell set. Because in this case, the candidate cell set includes two cells (the cell 0 and the cell 1), refer to the method 200 shown in FIG. 2.

When the gNB 0 is successfully connected to the gNB 2, the method 300 further includes the following steps.

S304: The gNB 0 sends a first request message to the gNB 1.

The first request message may be a DCS HANDOVER REQUEST message. This step is similar to S301, and a difference lies in that the first request message further indicates the gNB 2 to establish a connection to the gNB 1.

For example, the first request message sent by the gNB 0 to the gNB 1 further includes information about cells included in the candidate cell set, to enable the gNB 1 to establish the connection to the gNB 2. For example, because the signal quality of the cell 1 and the cell 2 exceeds the quality threshold, the gNB 0 selects the cell 1 and the cell 2 that are respectively managed by the gNB 1 and the gNB 2 and adds the cell 1 and the cell 2 to the candidate cell set. Therefore, when sending the first request message to the gNB 2, the gNB 0 notifies the gNB 2 of information about cells (the cell 0, the cell 1, and the cell 2) included in the candidate cell set. In this way, the gNB 2 may request to establish the connection to the gNB 1. The information about the cell may include at least one of a cell global identifier (cell global identifier, CGI), a physical cell identifier (physical cell identifier, PCI), and a cell identifier (cell identifier) of the cell. Optionally, the information about the cell may further include at least one of cell quality, frequency point information, and a beam identifier.

It should be understood that when the gNB 0 is not successfully connected to the gNB 1, the gNB 0 deletes the cell 1 from the candidate cell set, and the gNB 0 configures the DCS to include two cells (the cell 0 and the cell 2).

When the gNB 0 is successfully connected to the gNB 1, the method 300 further includes the following steps:
S305: The gNB 1 sends a third request message to the gNB 2.
S306: The gNB 2 sends, to the gNB 1, a third response message in response to the third request message.

For S305 and S306, respectively refer to the descriptions of S302 and S303. Details are not described herein again.

S308: The gNB 1 sends, to the gNB 0, a first response message in response to the first request message.

It should be noted that the first response message not only indicates a connection status between the gNB 0 and the gNB 1, but also indicates a connection status between the gNB 1 and the gNB 2. When the first response message indicates that the gNB 0 is successfully connected to the gNB 1, the first response message may be a DCS HANDOVER ACKNOWLEDGE message, and the message includes a C-RNTI configured by the gNB 1 for UE. The C-RNTI may be a cell-level C-RNTI or a cell pair-level C-RNTI.

Optionally, the message may further include RACH information configured by the gNB 1 for the UE. The RACH information may be cell-level RACH information or cell pair-level RACH information.

It should be noted that the DCS is successfully configured only when base stations to which any two cells in the DCS belong are successfully connected. In other words, even if the gNB 0 is successfully connected to both the gNB 1 and the gNB 2, cells included in the DCS still need to be determined based on the connection status between the gNB 1 and the gNB 2.

It should be understood that, in this case, there are the following two cases:
(1) The gNB 1 is successfully connected to the gNB 2, and the gNB 0 configures the DCS to include three cells (the cell 0, the cell 1, and the cell 2).
(2) The gNB 1 is not successfully connected to the gNB 2, and the gNB 0 configures the DCS to include two cells (the cell 0 and the cell 2, or the cell 0 and the cell 1).

S310: The gNB 0 sends DCS configuration information to the UE.

Refer to S204. Details are not described herein again.

Optionally, when the gNB 2 is successfully connected to the gNB 0, the method 300 further includes S303: The gNB 2 establishes a connection to an AMF network element. When the gNB 2 is successfully connected to the gNB 1, the method 300 further includes S307: The gNB 2 establishes the connection to the AMF network element. When the gNB 1 is successfully connected to the gNB 0, the method 300 further includes S309: The gNB 1 establishes a connection to the AMF network element. For S303, S307, and S309, refer to S203. Details are not described herein again.

Optionally, the method 300 further includes S311 and S312. To be specific, after the DCS is successfully configured, the gNB 0 may notify base stations to which all cells in the candidate cell set belong of the cells included in the DCS, so that the base stations to which all the cells in the candidate cell set belong may determine whether the cells managed by the base stations belong to the DCS. If one or more base stations determine that a cell managed by the one or more base stations does not belong to the DCS, and the one or more base stations configure a C-RNTI or a C-RNTI and RACH information for the UE, the one or more base stations may release the C-RNTI or the C-RNTI and the RACH information configured for the UE.

Optionally, the method 300 further includes S313: The gNB 0 sends DCS information to the AMF network element. Refer to S205. A difference lies in that the AMF network element may filter the cells included in the DCS, to release a connection between the AMF network element and a base station to which a cell that is not added to the DCS belongs. An example in which the gNB 2 has established the connection to the AMF network element, but the gNB 1 is not successfully connected to the gNB 2 is used for description. Because in this case, the gNB 0 may configure the DCS to include two cells (the cell 0 and the cell 1), the AMF network element releases the connection between the AMF network element and the gNB 2. Similarly, when the gNB 1 has established the connection to the AMF network element, but the gNB 0 configures the DCS to include two cells (the cell 0 and the cell 2), the AMF network element releases the connection between the AMF network element and the gNB 1.

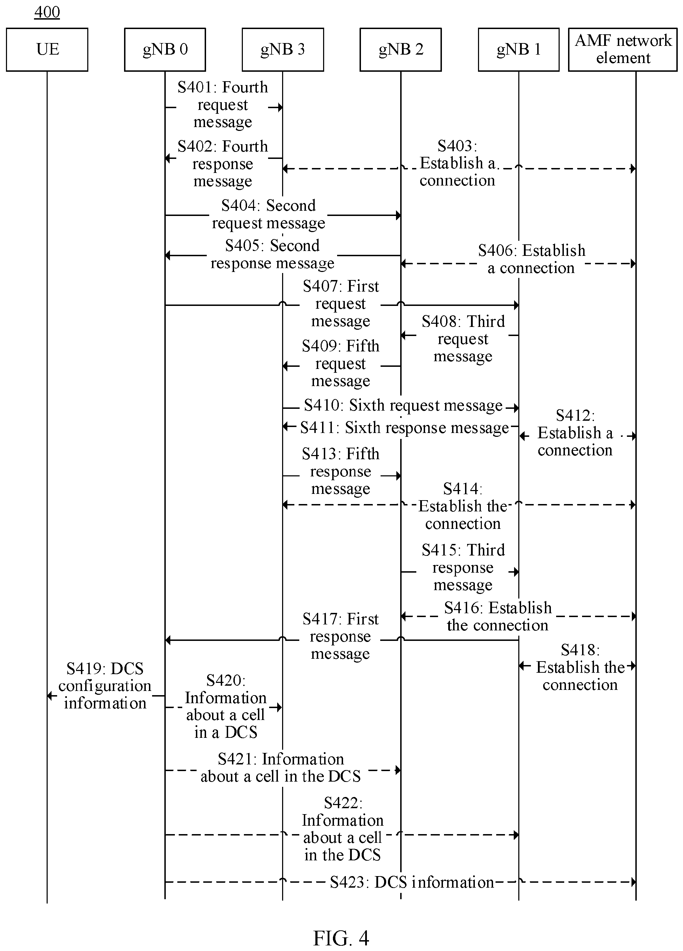

FIG. 4 is described by using an example in which signal quality of a cell 1, a cell 2, and a cell 3 exceeds a quality threshold. Because the signal quality of the cell 1, the cell 2, and the cell 3 exceeds the quality threshold, the gNB 0 adds, to the candidate cell set, the cell 1, the cell 2, and the cell 3 that are respectively managed by a gNB 1, a gNB 2, and a gNB 3.

For S401 and S402, respectively refer to S301 and S302. Details are not described herein again.

Optionally, when the gNB 0 is not successfully connected to the gNB 3, the gNB 0 deletes the cell 3 from the candidate cell set. Because in this case, the candidate cell set includes three cells (the cell 0, the cell 1, and the cell 2), refer to the method 300 shown in FIG. 3.

When the gNB 0 is successfully connected to the gNB 3, the method 400 further includes the following steps:
S404: The gNB 0 sends a second request message to the gNB 2.
S405: The gNB 2 sends, to the gNB 0, a second response message in response to the second request message.

For S404 and S405, respectively refer to S301 and S302. Details are not described herein again.

Optionally, when the gNB 0 is not successfully connected to the gNB 2, the gNB 0 deletes the cell 2 from the candidate cell set. Because in this case, the candidate cell set includes three cells (the cell 0, the cell 1, and the cell 3), refer to the method 300 shown in FIG. 3.

When the gNB 0 is successfully connected to the gNB 2, the method 400 further includes the following steps.

S407: The gNB 0 sends a first request message to the gNB 1. The first request message further includes information about cells in the candidate cell set. To be specific, the gNB 0 notifies the gNB 1 of information about the cells (the cell 0, the cell 1, the cell 2, and the cell 3) included in the candidate cell set, to enable the gNB 1 to filter base stations to which the cells in the candidate cell set belong, and establish a connection to a base station to which a connection has not been established. For example, in this case, the gNB 1 has established a connection to the gNB 0, and has not established connections to the gNB 3 and the gNB 2. In this case, the gNB 1 selects either the gNB 3 or the gNB 2 to establish a connection (the gNB 2 is used as an example).

S408: The gNB 1 sends a third request message to the gNB 2. It may be understood that the third request message further includes the information about the cells in the candidate cell set, to enable the gNB 2 to filter the base stations to which the cells in the candidate cell set belong, and establish a connection to a base station to which a connection has not been established. For example, in this case, the gNB 2 has separately established a connection to the gNB 0 and the gNB 1, and has not established a connection to the gNB 3. In this case, the gNB 2 establishes the connection to the gNB 3.

S409: The gNB 2 sends a fifth request message to the gNB 3. It may be understood that the fifth request message further includes the information about the cells in the candidate cell set, to enable the gNB 3 to filter the base stations to which the cells in the candidate cell set belong, and establish a connection to a base station to which a connection has not been established. For example, in this case, the gNB 3 has separately established a connection to the gNB 0 and the gNB 2, and has not established a connection to the gNB 1. In this case, the gNB 3 establishes the connection to the gNB 1.

S410: The gNB 3 sends a sixth request message to the gNB 1. It may be understood that the sixth request message further includes the information about the cells in the candidate cell set, to enable the gNB 1 to filter the base stations to which the cells in the candidate cell set belong, and establish a connection to a base station to which a connection has not been established. In this case, the gNB 1 has separately established a connection to the gNB 0, the gNB 3, and the gNB 2 (that is, base stations to which all cells in the candidate cell set belong), and the gNB 1 responds to the sixth request message.

S411: The gNB 1 sends, to the gNB 3, a sixth response message in response to the sixth request message. In this case, the gNB 3 has separately established a connection to the base stations to which all the cells in the candidate cell set belong, and the gNB 3 responds to the fifth request message.

S413: The gNB 3 sends, to the gNB 2, a fifth response message in response to the fifth request message. The fifth response message not only indicates a connection status between the gNB 3 and the gNB 2, but also indicates a connection status between the gNB 1 and the gNB 3. In this case, the gNB 2 has separately established a connection to the base stations to which all the cells in the candidate cell set belong, and the gNB 2 responds to the third request message.

S415: The gNB 2 sends, to the gNB 1, a third response message in response to the third request message. The third response message not only indicates a connection status between the gNB 2 and the gNB 1, but also indicates the connection status between the gNB 1 and the gNB 3 and the connection status between the gNB 2 and the gNB 3. In this case, the gNB 1 has separately established a connection to the base stations to which all the cells in the candidate cell set belong, and the gNB 1 responds to the first request message.

S417: The gNB 1 sends, to the gNB 0, a first response message in response to the first request message. The first response message not only indicates a connection status between the gNB 0 and the gNB 1, but also indicates the connection status between the gNB 1 and the gNB 3, the connection status between the gNB 3 and the gNB 2, and the connection status between the gNB 2 and the gNB 1.

The gNB 0 determines, based on the connection status between any two of the gNB 0, the gNB 1, the gNB 2, and the gNB 3, the cells included in the DCS.

S419: The gNB 0 sends DCS configuration information to the UE.

Refer to S310. Details are not described herein again.

Optionally, when the gNB 3 is successfully connected to the gNB 0, the method 400 further includes S403: The gNB 3 establishes a connection to an AMF network element. When the gNB 2 is successfully connected to the gNB 0, the method 400 further includes S406: The gNB 2 establishes a connection to the AMF network element. When the gNB 1 is successfully connected to the gNB 3, the method 400 further includes S412: The gNB 1 establishes a connection to the AMF network element. When the gNB 3 is successfully connected to the gNB 2, the method 400 further includes S414: The gNB 3 establishes the connection to the AMF network element. When the gNB 1 is successfully connected to the gNB 2, the method 400 further includes S416: The gNB 2 establishes the connection to the AMF network element. When the gNB 1 is successfully connected to the gNB 0, the method 400 further includes S418: The gNB 1 establishes the connection to the AMF network element.

Optionally, the method 400 further includes S420, S421, and S422. To be specific, after the DCS is successfully configured, the gNB 0 may notify the base stations to which all the cells in the candidate cell set belong of the cells included in the DCS, so that the base stations to which all the cells in the candidate cell set belong may determine whether the cells managed by the base stations belong to the DCS. If one or more base stations determine that a cell managed by the one or more base stations does not belong to the DCS, and the one or more base stations configure a C-RNTI or a C-RNTI and RACH information for the UE, the one or more base stations may release the C-RNTI or the C-RNTI and the RACH information configured for the UE.

Optionally, the method 400 further includes S423: The gNB 0 sends DCS information to the AMF network element.

Refer to S313. Details are not described herein again.

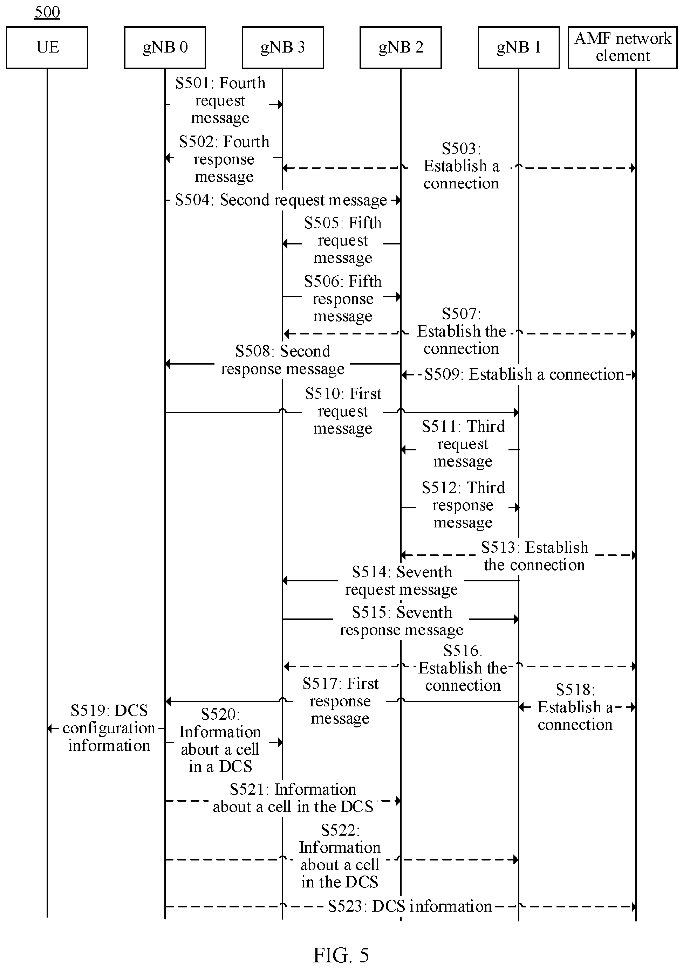

A method 500 is described by using an example in which a first network element is a gNB 0, a second network element is a gNB 1 and a gNB 2, and a core network element is an AMF network element. It should be understood that the example in which the first network element is the gNB 0, the second network element is the gNB 1 and the gNB 2, and the core network element is the AMF network element is merely used to help a person skilled in the art better understand solutions of this application, and should not be construed as a limitation on this application. In the method 500 shown in FIG. 5, for S501 and S502, refer to S401 and S402. A difference lies in that a second request message sent by the gNB 0 to the gNB 2 in S504 further indicates the gNB 2 to establish a connection to a gNB 3. Correspondingly, a second response message in response to the second request message in S508 not only indicates a connection status between the gNB 0 and the gNB 2, but also indicates a connection status between the gNB 2 and the gNB 3. A first request message sent by the gNB 0 to the gNB 1 in S510 further indicates the gNB 1 to separately establish a connection to the gNB 3 and the gNB 2. A first response message in response to the first request message in S517 not only indicates a connection status between the gNB 0 and the gNB 1, but also indicates a connection status between the gNB 2 and the gNB 1 and a connection status between the gNB 3 and the gNB 1. Optionally, when the gNB 0 is not successfully connected to the gNB 1, the gNB 0 deletes a cell 1 from a candidate cell set. Other steps are similar to those in the method 400. Details are not described herein again. The gNB 0 determines, based on a connection status between base stations to which any two cells in the candidate cell set belong, cells included in a DCS.

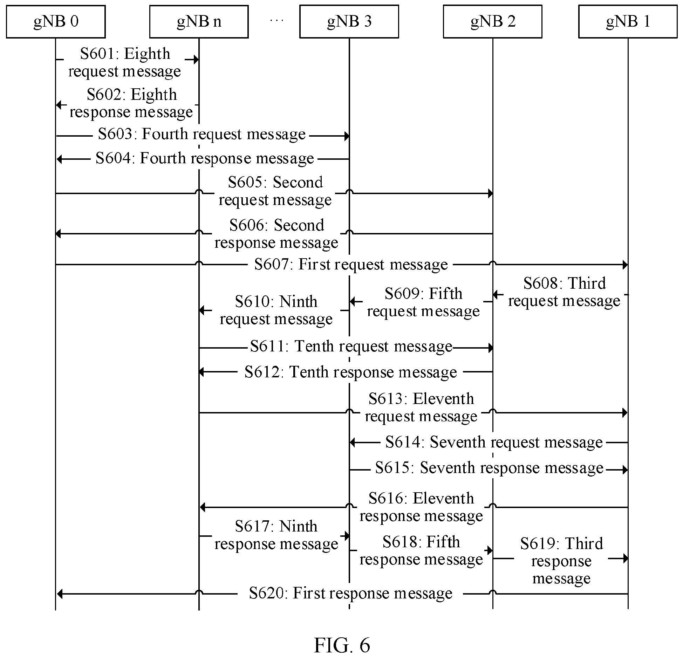

It should be understood that the candidate cell set may include more than four cells (a cell 0, a cell 1, a cell 2, a cell 3, ..., and a cell n). In a possible implementation, the primary base station gNB 0 first separately establishes a connection to the gNB 2, the gNB 3, ..., and a gNB n (S601 to S606). The first request message sent by the gNB 0 to the gNB 1 includes information about cells in the candidate cell set. The gNB 1 sends, to any one of secondary base stations to which connections have not been established, a request message including the information about the cells in the candidate cell set, so that the secondary base station receiving the request message may establish a connection to another secondary base station to which a connection has not been established, and so on, until the secondary base station receiving the request message has established a connection to any one of secondary base stations in the candidate cell set. In this case, the secondary base station responds to the request message, and so on, until the gNB 1 sends the first response message to the gNB 0. In this case, the first response message includes the connection status (that is, successful or unsuccessful) between the base stations to which the any two cells in the candidate cell set belong. The gNB 0 determines, based on the connection status between the base stations to which the any two cells in the candidate cell set belong, the cells included in the DCS. Refer to FIG. 6.

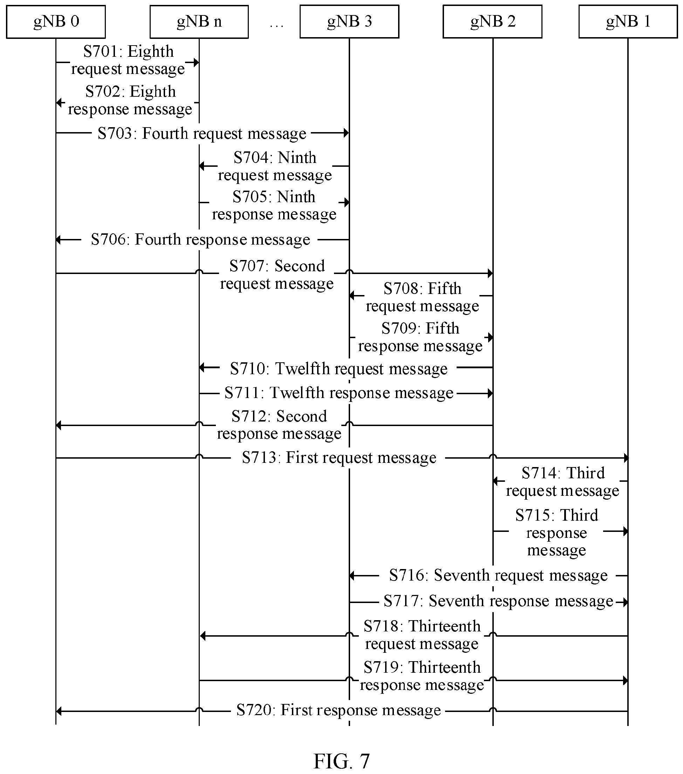

In another possible implementation, the gNB 0 first establishes a connection to a gNB n (for example, S701 and S702), and a request message sent when subsequently the gNB 0 separately establishes a connection to other secondary base stations (the gNB 3, the gNB 2, the gNB 1, and the like) includes one or more specified cells, so that the gNB 3, the gNB 2, and the gNB 1 may establish a connection to the one or more specified cells. The gNB 3, the gNB 2, and the gNB 1 send response messages to the gNB 0 to indicate a connection status (for example, S706, S712, or S720) between the gNB 0 and the gNB 3 (or the gNB 2 or the gNB 1) and a connection status between the gNB 3 (or the gNB 2 or the gNB 1) and the one or more specified cells, until a connection has been established between the base stations to which the any two cells in the candidate cell set belong. Refer to FIG. 7. When the connection has been established between the base stations to which the any two cells in the candidate cell set belong, the gNB 0 determines, based on the connection status between the base stations to which the any two cells in the candidate cell set belong, the cells included in the DCS.

In the foregoing technical solution, UE is configured with a DCS including a plurality of cells, and the UE can select a target cell in a larger range, to improve flexibility. In addition, the UE can select a cell that has better quality as the target cell, to improve communication quality of the UE after handover. When the UE is handed over between the cells included in the DCS, base stations to which all the cells in the DCS belong reserve context information of the UE, so that when the UE is handed over between cell groups included in the DCS, a reserved context can be directly used, to improve a handover rate. Further, the primary base station gNB 0 may determine, based on a connection status between secondary base stations, whether to separately establish a connection to all secondary base stations. In other words, the primary base station does not separately establish a connection to all the secondary base stations, so that signaling overheads can be further reduced.

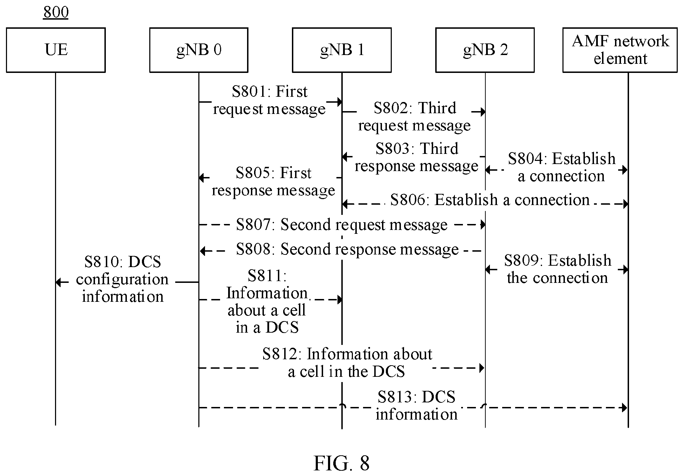

In methods provided in FIG. 8 to FIG. 12, a connection is first established between the secondary base stations. Then, the primary base station gNB 0 determines, based on the connection status between the secondary base stations, whether to separately establish a connection to the secondary base stations. A method 800 and a method 900 are described by using an example in which a first network element is a gNB 0, a second network element is a gNB 1, and a core network element is an AMF network element. It should be understood that the example in which the first network element is the gNB 0, the second network element is the gNB 1, and the core network element is the AMF network element is merely used to help a person skilled in the art better understand solutions of this application, and should not be construed as a limitation on this application.

FIG. 8 is described by using an example in which signal quality of a cell 1 and a cell 2 exceeds a quality threshold. Because the signal quality of the cell 1 and the cell 2 exceeds the quality threshold, the gNB 0 adds, to a candidate cell set, the cell 1 and the cell 2 that are respectively managed by the gNB 1 and a gNB 2.

S801: The gNB 0 sends a first request message to the gNB 1. The first request message includes information about cells in the candidate cell set, to enable the gNB 1 to establish a connection to the gNB 2.

Optionally, if the gNB 0 does not successfully establish a connection to the gNB 1, the gNB 0 deletes the cell 1 from the candidate cell set. Because in this case, the candidate cell set includes two cells (a cell 0 and the cell 2), refer to the method 200 shown in FIG. 2.

When the gNB 0 is successfully connected to the gNB 1, the method 800 further includes the following steps:
S802: The gNB 1 sends a third request message to the gNB 2.
S803: The gNB 2 sends, to the gNB 1, a third response message in response to the third request message.

For S802 and S803, respectively refer to S305 and S306. Details are not described herein again.

S805: The gNB 1 sends, to the gNB 0, a first response message in response to the first request message.

Refer to S308. Details are not described herein again.

Optionally, when the gNB 2 is not successfully connected to the gNB 1, the gNB 0 does not attempt to establish a connection to the gNB 2 again, in other words, the gNB 0 does not add, to a DCS, the cell 2 managed by the gNB 2. The gNB 0 configures the DCS to include two cells (the cell 0 and the cell 1).

S810: The gNB 0 sends DCS configuration information to UE.

Optionally, when the gNB 2 is successfully connected to the gNB 1, the method 800 further includes the following steps:
S807: The gNB 0 sends a second request message to the gNB 2.
S808: The gNB 2 sends, to the gNB 0, a second response message in response to the second request message.

When the gNB 0 is successfully connected to the gNB 2, the gNB 0 configures the DCS to include three cells (the cell 0, the cell 1, and the cell 2). When the gNB 0 is not successfully connected to the gNB 2, the gNB 0 configures the DCS to include two cells (the cell 0 and the cell 1).

Optionally, when the gNB 2 is successfully connected to the gNB 1, the method 800 further includes S804: The gNB 2 establishes a connection to the AMF network element. When the gNB 1 is successfully connected to the gNB 0, the method 800 further includes S806: The gNB 1 establishes a connection to the AMF network element. When the gNB 2 is successfully connected to the gNB 0, the method 800 further includes S809: The gNB 2 establishes the connection to the AMF network element.

Optionally, the method 800 further includes S811 and S812. To be specific, after the DCS is successfully configured, the gNB 0 may notify base stations to which all cells in the candidate cell set belong of the cells included in the DCS, so that the base stations to which all the cells in the candidate cell set belong may determine whether the cells managed by the base stations belong to the DCS. If one or more base stations to which a cell that does not belong to the DCS belongs determine that the cell managed by the one or more base stations does not belong to the DCS, and the one or more base stations configure a C-RNTI or a C-RNTI and RACH information for the UE, the one or more base stations may release the C-RNTI or the C-RNTI and the RACH information configured for the UE.

Optionally, the method 800 further includes S813: The gNB 0 sends DCS information to the AMF network element.

Refer to S313. Details are not described herein again.

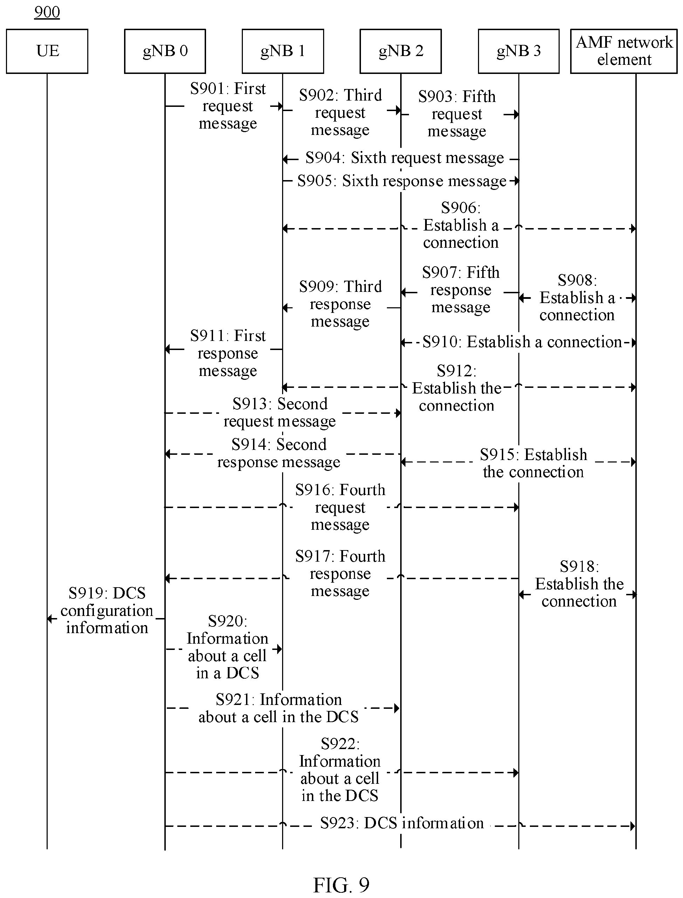

FIG. 9 is described by using an example in which signal quality of a cell 1, a cell 2, and a cell 3 exceeds a quality threshold. Because the signal quality of the cell 1, the cell 2, and the cell 3 exceeds the quality threshold, the gNB 0 adds, to a candidate cell set, a cell 0, the cell 1, and the cell 2 that are respectively managed by the gNB 1, a gNB 2, and a gNB 3.

S901: The gNB 0 sends a first request message to the gNB 1.

The first request message includes information about cells in the candidate cell set. To be specific, the gNB 0 notifies the gNB 1 of information about the cells (the cell 0, the cell 1, the cell 2, and the cell 3) included in the candidate cell set, to enable the gNB 1 to filter base stations to which the cells in the candidate cell set belong, and establish a connection to a base station to which a connection has not been established. For example, in this case, the gNB 1 has established a connection to the gNB 0, and has not established connections to the gNB 2 and the gNB 3. In this case, the gNB 1 selects either the gNB 2 or the gNB 3 to establish a connection.

Optionally, when the gNB 0 is not successfully connected to the gNB 1, the gNB 0 deletes the cell 1 from the candidate cell set. Because in this case, the candidate cell set includes three cells (the cell 0, the cell 2, and the cell 3), refer to the method 800 shown in FIG. 8.

When the gNB 0 is successfully connected to the gNB 1, the method 900 further includes the following steps.

For example, the gNB 1 selects the gNB 2 to establish a connection. S902: The gNB 1 sends a third request message to the gNB 2. It may be understood that the third request message further includes the information about the cells in the candidate cell set, and indicates that the gNB 0 is a primary base station, to enable the gNB 2 to filter the base stations to which the cells in the candidate cell set belong, and establish a connection to a base station to which a connection has not been established. For example, in this case, the gNB 2 has established the connection to the gNB 1, and has not established a connection to the gNB 3 (it should be noted that although the gNB2 has not established a connection to the gNB 0, the gNB 2, as a secondary base station, cannot actively establish the connection to the primary base station gNB 0). In this case, the gNB 2 establishes the connection to the gNB 3.

S903: The gNB 2 sends a fifth request message to the gNB 3. It may be understood that the fifth request message further includes the information about the cells in the candidate cell set, and indicates that the gNB 0 is the primary base station, to enable the gNB 3 to filter the base stations to which the cells in the candidate cell set belong, and establish a connection to a base station to which a connection has not been established. For example, in this case, the gNB 3 has established the connection to the gNB 2, and has not established a connection to the gNB 1. Therefore, the gNB 3 establishes the connection to the gNB 1.

S904: The gNB 3 sends a sixth request message to the gNB 1. It may be understood that the sixth request message further includes the information about the cells in the candidate cell set, to enable the gNB 1 to filter the base stations to which the cells in the candidate cell set belong, and establish a connection to a base station to which a connection has not been established. In this case, the gNB 1 has established connections to the gNB 0, the gNB 2, and the gNB 3 (that is, network elements to which all cells in the candidate cell set belong), and the gNB 1 responds to the sixth request message.

S905: The gNB 1 sends, to the gNB 3, a sixth response message in response to the sixth request message. In this case, the gNB 3 has separately established a connection to base stations to which all the cells in the candidate cell set belong, and the gNB 3 responds to the fifth request message.

S907: The gNB 3 sends, to the gNB 2, a fifth response message in response to the fifth request message. It should be noted that the fifth response message not only indicates a connection status between the gNB 2 and the gNB 3, but also indicates a connection status between the gNB 1 and the gNB 3. In this case, the gNB 2 has separately established a connection to the base stations to which all the cells in the candidate cell set belong, and the gNB 2 responds to the third request message.

S909: The gNB 2 sends, to the gNB 1, a third response message in response to the third request message. It should be noted that the third response message not only indicates a connection status between the gNB 1 and the gNB 2, but also indicates the connection status between the gNB 1 and the gNB 3 and the connection status between the gNB 2 and the gNB 3. In this case, the gNB 1 has separately established a connection to the base stations to which all the cells in the candidate cell set belong, and the gNB 1 responds to the first request message.

S911: The gNB 1 sends, to the gNB 0, a first response message in response to the first request message. It should be noted that the first response message not only indicates a connection status between the gNB 0 and the gNB 1, but also indicates the connection status between the gNB 1 and the gNB 3, the connection status between the gNB 1 and the gNB 2, and the connection status between the gNB 2 and the gNB 3.

In this case, any two secondary base stations have established a connection, and the gNB 0 determines, based on a connection status between the any two secondary base stations, whether to separately establish a connection to the secondary base stations.

When the gNB 1 is not successfully connected to the gNB 2, the gNB 1 is successfully connected to the gNB 3, and the gNB 2 is successfully connected to the gNB 3, the method 900 further includes S916 and S917.

When the gNB 1 is successfully connected to the gNB 2, the gNB 2 is successfully connected to the gNB 3, and the gNB 1 is not successfully connected to the gNB 3, the method 900 further includes S913 and S914.

When the gNB 1 is successfully connected to the gNB 2, the gNB 1 is successfully connected to the gNB 3, and the gNB 2 is not successfully connected to the gNB 3, optionally, in a possible implementation, the method 900 further includes S913 and S914. If the gNB 0 is successfully connected to the gNB 2, the gNB 0 configures the DCS to include three cells (the cell 0, the cell 1, and the cell 2). If the gNB 0 is not successfully connected to the gNB 2, the method 900 further includes S916 and S917. In this case, if the gNB 0 is successfully connected to the gNB 3, the gNB 0 configures the DCS to include three cells (the cell 0, the cell 1, and the cell 3). If the gNB 0 is not successfully connected to the gNB 3, the gNB 0 configures the DCS to include two cells (the cell 0 and the cell 1). In another possible implementation, the method 900 further includes S916 and S917. If the gNB 0 is successfully connected to the gNB 3, the gNB 0 configures the DCS to include three cells (the cell 0, the cell 1, and the cell 3). If the gNB 0 is not successfully connected to the gNB 3, the method 900 further includes S913 and S914. In this case, if the gNB 0 is successfully connected to the gNB 2, the gNB 0 configures the DCS to include three cells (the cell 0, the cell 1, and the cell 2). If the gNB 0 is not successfully connected to the gNB 2, the gNB 0 configures the DCS to include two cells (the cell 0 and the cell 1).

Optionally, when the gNB 1 is successfully connected to the gNB 3, the method 900 further includes S906: The gNB 1 establishes a connection to the AMF network element. When the gNB 2 is successfully connected to the gNB 3, the method 900 further includes S908: The gNB 3 establishes a connection to the AMF network element. When the gNB 1 is successfully connected to the gNB 2, the method 900 further includes S910: The gNB 2 establishes a connection to the AMF network element. When the gNB 1 is successfully connected to the gNB 0, the method 900 further includes S912: The gNB 1 establishes the connection to the AMF network element. When the gNB 2 is successfully connected to the gNB 0, the method 900 further includes S915: The gNB 2 establishes the connection to the AMF network element. When the gNB 0 is successfully connected to the gNB 3, the method 900 further includes S918: The gNB 3 establishes the connection to the AMF network element.

Optionally, the method 900 further includes S920, S921, and S922. To be specific, after the DCS is successfully configured, the gNB 0 may notify the base stations to which all the cells in the candidate cell set belong of the cells included in the DCS. If a base station to which a cell that does not belong to the DCS belongs configures a C-RNTI or a C-RNTI and RACH information for UE, the base station may release the C-RNTI or the C-RNTI and the RACH information configured for the UE.

Optionally, the method 900 further includes S923: The gNB 0 sends DCS information to the AMF network element.

Refer to S313. Details are not described herein again.

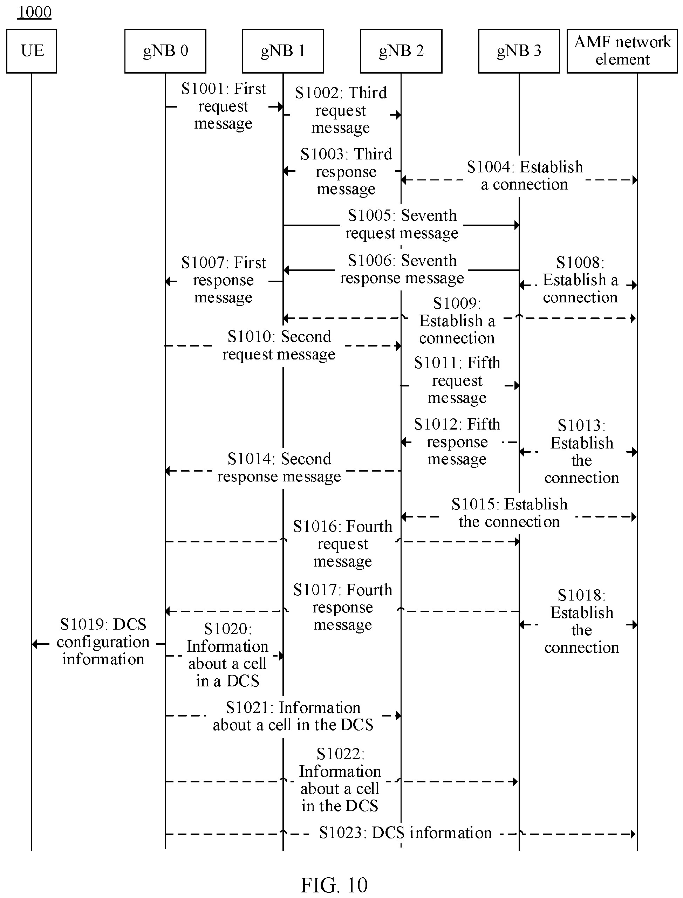

A method 1000 is described by using an example in which a first network element is a gNB 0, a second network element is a gNB 1 and a gNB 2, and a core network element is an AMF network element. It should be understood that the example in which the first network element is the gNB 0, the second network element is the gNB 1 and the gNB 2, and the core network element is the AMF network element is merely used to help a person skilled in the art better understand solutions of this application, and should not be construed as a limitation on this application. In the method 1000 shown in FIG. 10, for S1001, refer to S901. A difference lies in that a first request message sent by the gNB 0 to the gNB 1 in S1001 indicates the gNB 1 to separately establish a connection to the gNB 2 and a gNB 3. Correspondingly, a first response message in S1007 not only indicates a connection status between the gNB 0 and the gNB 1, but also indicates a connection status between the gNB 1 and the gNB 2 and a connection status between the gNB 1 and the gNB 3. When the gNB 1 is not successfully connected to the gNB 2, and the gNB 1 is successfully connected to the gNB 3, the gNB 0 establishes a connection to the gNB 3, in other words, the method 1000 further includes S1016 and S1017. When the gNB 1 is successfully connected to the gNB 2, and the gNB 1 is not successfully connected to the gNB 3, the gNB 0 establishes a connection to the gNB 2, in other words, the method 1000 further includes S1010 and S1014. When the gNB 1 is successfully connected to both the gNB 2 and the gNB 3, the method 1000 further includes S1010, S1011, S1012, S1014, S1016, and S1017. Other steps are similar to those in the method 900. Details are not described herein again. The gNB 0 determines, based on a connection status between any two base stations, cells included in a DCS.

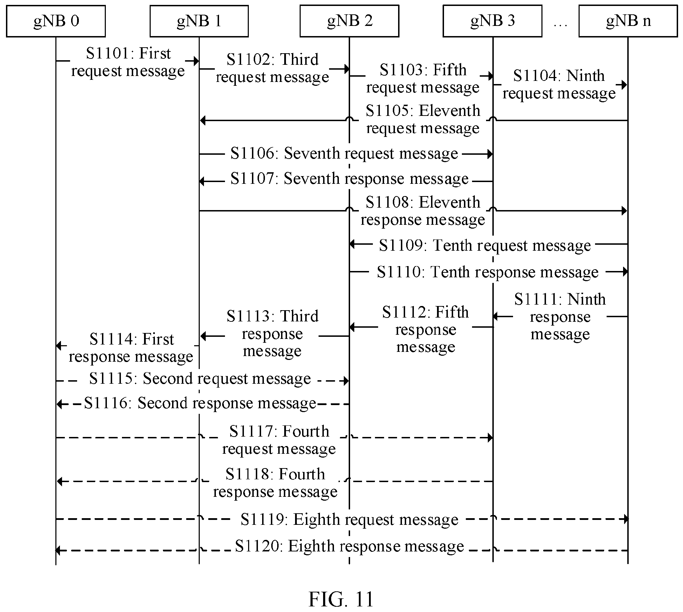

It should be understood that a candidate cell set may include more than four cells (a cell 0, a cell 1, a cell 2, a cell 3, ..., and a cell n). In a possible implementation, the primary base station gNB 0 first establishes a connection to the gNB 1 (S1101), and notifies the gNB 1 of the cells included in the candidate cell set. The gNB 1 sifts out secondary base stations to which connections have not been established, and sends, to any one of the secondary base stations, a request message including a base station list of the candidate cell set, so that the secondary base station receiving the request message may establish a connection to another base station to which a connection has not been established, and so on, until the secondary base station receiving the request message has established a connection to any one of secondary base stations in the candidate cell set. In this case, the secondary base station responds to the request message, and so on, until the gNB 1 sends the first response message to the gNB 0 (S1114). In this case, the gNB 0 determines, based on the first response message, specific secondary base stations to which a connection is separately established. Refer to FIG. 11. The gNB 0 determines, based on the connection status between the any two base stations, the cells included in the DCS.

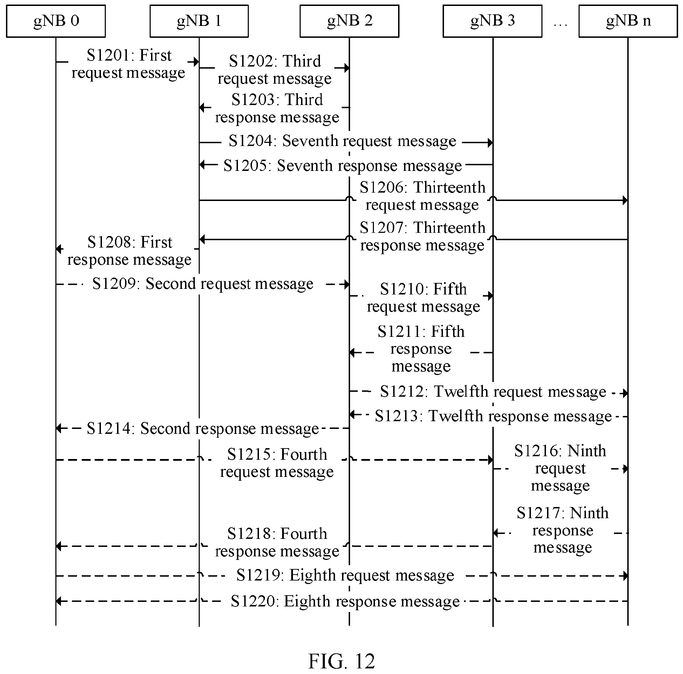

In another possible implementation, the gNB 0 establishes a connection to the gNB 1, and indicates the gNB 1 to establish a connection to one or more cells specified by the gNB 0. The gNB 1 sends a response message to the gNB 0, to indicate a connection status between the gNB 0 and the gNB 1 and a connection status between the gNB 1 and the one or more specified cells. The gNB 0 determines, based on the connection status between the gNB 1 and the one or more specified cells, specific secondary base stations to which a connection is separately established. A process of establishing a connection between the gNB 0 and another secondary base station is similar to a process of establishing the connection between the gNB 0 and the gNB 1. Refer to FIG. 12. The gNB 0 determines, based on the connection status between the any two base stations, the cell included in the DCS.

A method 1300 and a method 1400 are described by using an example in which a first network element is a gNB 0, a third network element is a gNB 1, and a fourth network element is a gNB 4. It should be understood that the example in which the first network element is the gNB 0, the third network element is the gNB 1, and the fourth network element is the gNB 4 is merely used to help a person skilled in the art better understand solutions of this application, and should not be construed as a limitation on this application.

In the foregoing technical solution, UE is configured with a DCS including a plurality of cells, and the UE can select a target cell in a larger range, to improve flexibility. The UE can select a cell that has better quality, to improve communication quality of a terminal after handover. When the UE is handed over between the cells included in the DCS, base stations to which all the cells in the DCS belong reserve context information of the UE, so that when the UE is handed over between cell groups included in the DCS, a reserved context can be directly used, to improve a handover rate. Further, the primary base station gNB 0 may determine, based on a connection status between secondary base stations, whether to separately establish a connection to all secondary base stations. In other words, the primary base station does not separately establish a connection to all the secondary base stations, so that signaling overheads can be further reduced.

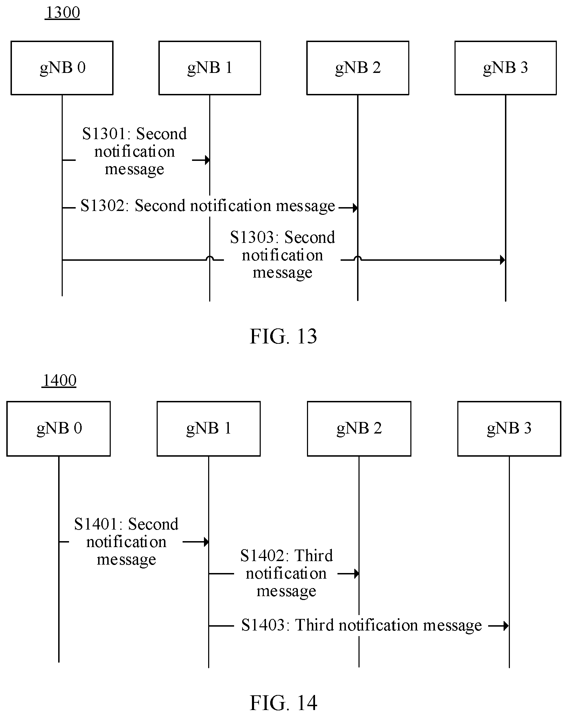

After configuring the DCS (refer to FIG. 2 to FIG. 12) for the UE, the gNB 0 is further responsible for maintaining the cell included in the DCS, including updating the DCS. For example, the gNB 0 may determine, based on cell quality information in a measurement report periodically reported by the UE, to delete a cell from the DCS or add, to the DCS, a cell that does not belong to the DCS. For example, the DCS includes a cell 0, a cell 1, a cell 2, and a cell 3. In FIG. 13, a manner of updating the DCS is considered. The gNB 0 separately sends, to the gNB 1, a gNB 2, and a gNB 3, information about a cell that needs to be deleted from or added to the DCS.

S1301: The gNB 0 sends a second notification message to the gNB 1. The second notification message indicates the gNB 1 to delete the gNB 4 or establish a connection to the gNB 4.

When a cell 4 managed by the gNB 4 belongs to the DCS, if signal quality of the cell 4 is less than a quality threshold set by the gNB 0, the gNB 0 deletes the cell 4 from the DCS. For example, the gNB 0 may send a cell 4 deletion (DELETE cell 4) message to the gNB 1. The gNB 1 deletes the gNB 4 after receiving the message. Optionally, if an AMF network element has set up, for the UE, context information used for handover between the gNB 1 and the gNB 4, the gNB 1 may notify the AMF network element to delete the context information.

When the cell 4 managed by the gNB 4 does not belong to the DCS, if the signal quality of the cell 4 exceeds the quality threshold set by the gNB 0, the gNB 0 determines, based on cell quality, to add the cell 4 to the DCS. For example, the gNB 0 sends a cell 4 addition (ADD cell 4) message to the gNB 1. The gNB 1 establishes the connection to the gNB 4 after receiving the message. Optionally, the AMF network element may set up, for the UE, the context information used for the handover between the gNB 1 and the gNB 4.

S1302: The gNB 0 sends the second notification message to the gNB 2.

S1303: The gNB 0 sends the second notification message to the gNB 3.

For S1302 and S1303, refer to S1301. Details are not described herein again.

It should be understood that an execution sequence of S1301, S1302, and S1303 is not limited in this embodiment of this application.

When the gNB 0 deletes the cell 4 from the DCS, the gNB 0 notifies the UE to delete a C-RNTI configured by the gNB 4 for the UE. When the gNB 4 is successfully connected to a base station to which any cell in the DCS belongs, the gNB 0 adds the cell 4 to the DCS, and the gNB 0 sends, to the UE, the C-RNTI configured by the gNB 4 for the UE.

In FIG. 14, another manner of updating the DCS is considered. The gNB 0 sends, to a base station (for example, the gNB 1) to which any cell in the DCS belongs, information about a cell that needs to be deleted from or added to the DCS, and indicates the base station to notify a base station to which another cell in the DCS belongs.

S1401: The gNB 0 sends a second notification message to the gNB 1. The second notification message indicates the gNB 1 to delete the gNB 4 or establish a connection to the gNB 4.

Similar to S1301, a difference lies in that in this case, the second notification message further indicates the gNB 1 to separately send, to a base station to which another cell in the DCS belongs, a third notification message that indicates to delete the gNB 4 or establish a connection to the gNB4.

S1402: The gNB 1 sends the third notification message to a gNB 2.

S1403: The gNB 1 sends the third notification message to a gNB 3.

It should be understood that an execution sequence of S1402 and S1403 is not limited in this embodiment of this application.

When the gNB 0 deletes the cell 4 from the DCS, the gNB 0 notifies the UE to delete a C-RNTI configured by the gNB 4 for the UE. When the gNB 4 is successfully connected to a base station to which any cell in the DCS belongs, the gNB 0 adds the cell 4 to the DCS, and the gNB 0 sends, to the UE, the C-RNTI configured by the gNB 4 for the UE.

In the foregoing technical solution, the gNB 0 may delete a cell that is in the DCS and whose signal quality does not meet a requirement, or add, to the DCS, a cell that does not belong to the DCS and whose signal quality meets a requirement. In other words, the gNB 0 may update, based on the signal quality, a cell included in the DCS in a timely manner, so that the UE can select a more appropriate target cell from an updated DCS, to improve a handover success rate.

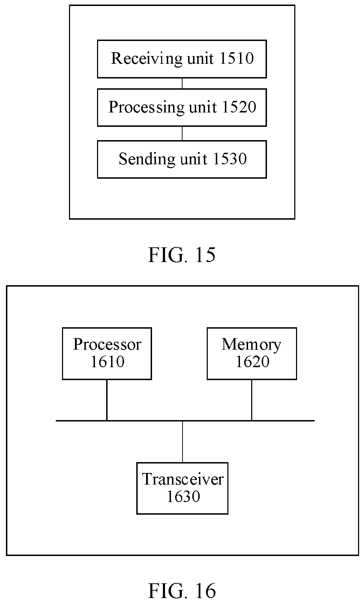

FIG. 15 is a schematic block diagram of a communication apparatus according to this application. The communication apparatus includes a processing unit 1520 and a sending unit 1530. Optionally, the communication apparatus may be configured to implement the steps or procedures performed by the base station in the foregoing method embodiments. For example, the communication apparatus may be a base station, or may be a chip or a circuit in the base station. The processing unit 1520 is configured to perform a processing-related operation of the base station in the foregoing method embodiments, and the sending unit is configured to perform a sending-related operation of the base station in the foregoing method embodiments. Optionally, the communication apparatus further includes a receiving unit 1510. The receiving unit 1510 is configured to perform a receiving-related operation of the base station in the foregoing method embodiments. Optionally, the sending unit 1530 and the receiving unit 1510 may alternatively be integrated into one transceiver unit that has both a receiving function and a sending function. This is not limited herein.

Optionally, the communication apparatus may be configured to implement the steps or procedures performed by the AMF network element in the foregoing method embodiments. For example, the communication apparatus may be an AMF network element, or may be a chip or a circuit in an AMF network element. The processing unit 1520 is configured to perform a processing-related operation of the AMF network element in the foregoing method embodiments, and the sending unit is configured to perform a sending-related operation of the AMF network element in the foregoing method embodiments. Optionally, the communication apparatus further includes a receiving unit 1510. The receiving unit 1510 is configured to perform a receiving-related operation of the AMF network element in the foregoing method embodiments. Optionally, the sending unit 1530 and the receiving unit 1510 may alternatively be integrated into one transceiver unit that has both a receiving function and a sending function. This is not limited herein.

Optionally, the communication apparatus may be configured to implement the steps or procedures performed by the terminal in the foregoing method embodiments. For example, the communication apparatus may be a terminal, or may be a chip or a circuit in the terminal. The processing unit 1520 is configured to perform a processing-related operation of the terminal in the foregoing method embodiments, and the sending unit is configured to perform a sending-related operation of the terminal in the foregoing method embodiments. Optionally, the communication apparatus further includes a receiving unit 1510. The receiving unit 1510 is configured to perform a receiving-related operation of the terminal in the foregoing method embodiments. Optionally, the sending unit 1530 and the receiving unit 1510 may alternatively be integrated into one transceiver unit that has both a receiving function and a sending function. This is not limited herein.

FIG. 16 is a diagram of a structure of a communication apparatus according to this application. The communication apparatus includes a processor 1610. The processor 1610 is coupled to a memory 1620. The memory 1620 is configured to store a computer program or instructions and/or data. The processor 1610 is configured to execute the computer program or the instructions stored in the memory 1620, or read the data stored in the memory 1620, to perform the methods in the foregoing method embodiments.

Optionally, there are one or more processors 1610.

Optionally, there are one or more memories 1620.

Optionally, the memory 1620 and the processor 1610 are integrated together, or are disposed separately.

Optionally, as shown in FIG. 16, the communication apparatus may further include a transceiver 1630. The transceiver 1630 is configured to receive and/or send signals. For example, the processor 1610 is configured to control the transceiver 1630 to receive and/or send a signal.

Optionally, the communication apparatus may be configured to implement operations performed by the base station in the foregoing method embodiments. For example, the processor 1210 is configured to execute the computer program or the instructions stored in the memory 1620, to implement related operations performed by the base station in the foregoing method embodiments. For example, the transceiver 1630 may be configured to perform a sending operation of the gNB 0 in S201 shown in FIG. 2, and may be further configured to perform a receiving operation of the gNB 0 in S202. The processor 1610 is configured to perform processing steps of the base station in embodiments of this application. For example, the processor 1610 is configured to perform a processing operation of adding a cell to a DCS or deleting a cell from a DCS. It should be understood that the communication apparatus shown in FIG. 16 may perform an operation performed by any base station such as the gNB1, the gNB2, or the gNB3 in FIG. 2 to FIG. 14.

Optionally, the communication apparatus may be configured to implement operations performed by the terminal in the foregoing method embodiments. For example, the processor 1610 is configured to execute the computer program or the instructions stored in the memory 1620, to implement related operations performed by the terminal in the foregoing method embodiments. For example, the transceiver 1630 may be configured to perform sending and receiving steps of the terminal in embodiments of this application. For example, the transceiver 1630 may be configured to perform S204 shown in FIG. 2.

Optionally, the communication apparatus may be configured to implement the operations performed by the AMF network element in the foregoing method embodiments. For example, the processor 1610 is configured to execute the computer program or the instructions stored in the memory 1620, to implement related operations performed by the terminal in the foregoing method embodiments. For example, the transceiver 1630 may be configured to perform a receiving operation of the AMF network element in S203 shown in FIG. 2, and may be further configured to perform a sending operation of the AMF network element in S203. The processor 1610 is configured to perform processing steps of the AMF network element in embodiments of this application. For example, the processor 1610 is configured to perform operations of establishing connections in S203 shown in FIG. 2.

It should be further understood that FIG. 16 is merely an example rather than a limitation, and the communication apparatus including the processor, the memory, and the transceiver may not depend on the structure shown in FIG. 16.

In addition, this application further provides a chip, and the chip includes a processor. A memory configured to store a computer program is disposed independently of the chip, and the processor is configured to execute the computer program stored in the memory, so that an operation and/or processing performed by the base station, the terminal, or the AMF network element in any method embodiment are/is performed.

Further, the chip may include a communication interface. The communication interface may be an input/output interface, an interface circuit, or the like. Further, the chip may include a memory.

The chip in embodiments of this application may be a field programmable gate array (field programmable gate array, FPGA), an application-specific integrated chip (application-specific integrated chip, ASIC), a system on chip (system on chip, SoC), a CPU, a network processor (network processor, NP), a digital signal processor (digital signal processor, DSP), a micro controller unit (micro controller unit, MCU), a programmable logic device (programmable logic device, PLD), another programmable logic device, a discrete gate, a transistor logic device, a discrete hardware component, or another integrated chip.

In an implementation process, steps in the foregoing methods can be implemented through a hardware integrated logical circuit in the processor or by using instructions in a form of software. The steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in a memory, and a processor reads information in the memory and completes the steps in the foregoing methods in combination with hardware of the processor. To avoid repetition, details are not described herein.

It should be noted that, the processor in embodiments of this application may be an integrated circuit chip, and has a signal processing capability. In an implementation process, steps in the foregoing method embodiments can be implemented through a hardware integrated logical circuit in the processor or by using instructions in a form of software. A general-purpose processor may be a microprocessor, or the processor may be any conventional processor or the like. The steps of the method disclosed with reference to embodiments of this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in a memory, and a processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable ROM (programmable ROM, PROM), an erasable PROM (erasable PROM, EPROM), an electrically EPROM (electrically EPROM, EEPROM), or a flash memory. The volatile memory may be a random access memory (random access memory, RAM), used as an external cache. Through example but not limitative descriptions, many forms of RAMs may be used, for example, a static RAM (static RAM, SRAM), a dynamic RAM (dynamic RAM, DRAM), a synchronous DRAM (synchronous DRAM, SDRAM), a double data rate SDRAM (double data rate SDRAM, DDR SDRAM), an enhanced SDRAM (enhanced SDRAM, ESDRAM), a synchlink DRAM (synchlink DRAM, SLDRAM), and a direct rambus RAM (direct rambus RAM, DR RAM). It should be noted that the memory of the systems and methods described in this specification includes but is not limited to these and any memory of another proper type.

According to the method provided in embodiments of this application, this application further provides a computer program product. The computer program product includes computer program code. When the computer program code is run on a computer, the computer is enabled to perform the method in any one of the embodiments shown in FIG. 2 to FIG. 14.

According to the method provided in embodiments of this application, this application further provides a computer-readable medium. The computer-readable medium stores program code. When the program code is run on a computer, the computer is enabled to perform the method in any one of the embodiments shown in FIG. 2 to FIG. 14.

According to the method provided in embodiments of this application, this application further provides a system. The system includes the foregoing one or more terminal devices and the foregoing one or more network devices.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the apparatus embodiment described above is merely an example. For example, division into the units is merely logical function division and there may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technologies, or some of the technical solutions may be implemented in a form of a software product. The computer software product is stored in a storage medium, and includes several instructions for enabling a computer device (which may be a personal computer, a server, or a network device) to perform all or some of the steps of the methods described in embodiments of this application. The foregoing storage medium includes any medium that can store program code, such as a USB flash drive, a removable hard disk drive, a ROM, a RAM, a magnetic disk, or an optical disc.

The "a plurality of" in embodiments of this application refers to "two or more".

Descriptions such as "first" and "second" in embodiments of this application are merely used for illustration and distinguishing between described objects, are not sequenced, do not represent a special limitation on a quantity of described objects in embodiments of this application, and do not constitute any limitation on embodiments of this application.

Mutual reference may be made to content in embodiments of this application. Unless otherwise specified or a logical conflict occurs, terms and/or descriptions in different embodiments are consistent and may be referenced by each other. Technical features in different embodiments may be combined to form a new embodiment based on an internal logical relationship thereof.

It may be understood that in embodiments of this application, the terminal and/or the network device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

## Claims

1. A method for configuring a dynamic cell set, applied to a first network element, wherein the dynamic cell set is a set of at least two cells or cell groups, base stations to which all the cells in the dynamic cell group belong reserve context information of a terminal, only one cell in the dynamic cell set is activated each time, signaling and/or data related to the terminal is sent only to a base station to which the activated cell belongs and the activate cell is referred to as a serving cell of the terminal, wherein the method comprises:
sending (S201) a first request message to a second network element, wherein the first request message is used to request to establish a connection to the second network element, and a first cell group managed by the first network element and a second cell group managed by the second network element belong to a candidate cell set of a dynamic cell set, DCS; and
receiving (S202) a first response message in response to the first request message,
wherein the first request message further indicates the second network element to establish a connection to at least one of N network elements other than the first network element, N cell groups managed by the N network elements belong to the candidate cell set, and N is an integer greater than 2; and
the first response message indicates that the second network element is successfully connected to the at least one of N network elements other than the first network element.

2. The method according to claim 1, wherein when a terminal is handed over between cell groups comprised in the DCS, context information of the terminal is separately reserved on network elements to which the cell groups in the DCS belong.

3. The method according to claim 1 or 2, wherein the at least one of N network elements are any two of N network elements other than the first network element as a group to establish a connection; and
the first response message indicates that at least one group of any two of the N network elements other than the first network element are successfully connected.

4. The method according to one of the claims 1 to 3, wherein before the first network element sends the first request message to the second network element, the method further comprises:
requesting to separately establish a connection to at least one of the N network elements other than the first network element and the second network element.

5. The method according to claim 1, wherein the first network element is successfully connected to the second network element, and the method further comprises:
requesting to establish a connection to the at least one network element.

6. The method according to claim 3, wherein the first network element is successfully connected to the second network element, and the method further comprises:
requesting (S203) to separately establish a connection to at least one network element, other than the second network element, in the at least one group of network elements that are successfully connected.

7. The method according to any one of claims 1 to 6, wherein any two of K network elements are successfully connected, the K network elements comprise the first network element, the K network elements belong to the N network elements, and the method further comprises:
sending (S204) DCS configuration information to the terminal, wherein the DCS configuration information comprises a cell-radio network temporary identifier, C-RNTI, configured for the terminal by another network element in the K network elements other than the first network element.

8. The method according to claim 7, wherein the method further comprises:
separately sending, to the another network element in the K network elements other than the first network element, a second notification message used to indicate to delete a fourth network element, wherein a fourth cell group managed by the fourth network element belongs to the DCS, and signal quality of the fourth cell group is less than a first threshold.

9. The method according to claim 7, wherein the method further comprises:
separately sending, to the another network element in the K network elements other than the first network element, a second notification message used to indicate to establish a connection to a fourth network element, wherein a fourth cell group managed by the fourth network element does not belong to the DCS, and signal quality of the fourth cell group is greater than or equal to a first threshold.

10. The method according to claim 7, wherein the method further comprises:
sending, to a third network element, a second notification message used to notify to delete a fourth network element, wherein the third network element is any one of the K network elements other than the first network element, a fourth cell group managed by the fourth network element belongs to the DCS, signal quality of the fourth cell group is less than a first threshold, and the second notification message further indicates the third network element to separately send, to another network element in the K network elements other than the first network element and the third network element, a third notification message used to notify to delete the fourth network element.

11. The method according to claim 7, wherein the method further comprises:
sending, to a third network element, a second notification message used to indicate to establish a connection to a fourth network element, wherein the third network element is any one of the K network elements other than the first network element, a fourth cell group managed by the fourth network element does not belong to the DCS, signal quality of the fourth cell group is greater than or equal to a first threshold, and the second notification message further indicates the third network element to separately send, to another network element in the K network elements other than the first network element and the third network element, a third notification message used to indicate to establish a connection to the fourth network element.

12. The method according to any one of claims 7 to 11, wherein the method further comprises:
sending, to a core network element, identification information of the cell group comprised in the DCS or first DCS indication information, wherein the first DCS indication information indicates the core network element to maintain a connection to the first network element when the terminal is handed over between the cell groups comprised in the DCS; and
the first DCS indication information indicates the core network element to maintain, when the terminal is handed over between the cell groups comprised in the DCS, a connection to the network element to which the cell group comprised in the DCS belongs.

13. A first network element, wherein the first network element comprises a processor and a memory; and the memory comprises program instructions, and when the program instructions are run by the processor, the method according to any one of claims 1 to 12 is performed.

14. A computer-readable storage medium, comprising computer instructions, and when the computer instructions run on a first network element, the first network element is enabled to perform the method according to any one of claims 1 to 12.

## Patentansprüche

1. Verfahren zum Konfigurieren eines dynamischen Zellensatzes, das auf ein erstes Netzelement angewendet wird, wobei der dynamische Zellensatz ein Satz aus mindestens zwei Zellen oder Zellengruppen ist, Basisstationen, zu denen sämtliche Zellen in der dynamischen Zellengruppe gehören, Kontextinformationen eines Endgeräts reservieren, jedes Mal nur eine Zelle in dem dynamischen Zellensatz aktiviert wird, Signalisierung und/oder Daten in Bezug auf das Endgerät nur an eine Basisstation gesendet werden, zu der die aktivierte Zelle gehört, und die aktivierte Zelle als bedienende Zelle des Endgeräts bezeichnet wird, wobei das Verfahren Folgendes umfasst:
Senden (S201) einer ersten Anforderungsnachricht an ein zweites Netzelement, wobei die erste Anforderungsnachricht verwendet wird, um die Herstellung einer Verbindung zu dem zweiten Netzelement anzufordern, und eine erste Zellengruppe, die durch das erste Netzelement verwaltet wird, und eine zweite Zellengruppe, die durch das zweite Netzelement verwaltet wird, zu einem Kandidatenzellensatz eines dynamischen Zellensatzes, DCS, gehören; und
Empfangen (S202) einer ersten Antwortnachricht als Antwort auf die erste Anforderungsnachricht,
wobei die erste Anforderungsnachricht ferner dem zweiten Netzelement anzeigt, eine Verbindung zu mindestens einem von N Netzelementen außer dem ersten Netzelement herzustellen, N Zellengruppen, die durch die N Netzelemente verwaltet werden, zu dem Kandidatenzellensatz gehören und N eine Ganzzahl größer als 2 ist; und
die erste Antwortnachricht anzeigt, dass das zweite Netzelement erfolgreich mit dem mindestens einen von N Netzelementen außer dem ersten Netzelement verbunden ist.

2. Verfahren nach Anspruch 1, wobei bei der Übergabe eines Endgeräts zwischen Zellengruppen, die in dem DCS umfasst sind, Kontextinformationen des Endgeräts separat auf Netzelementen reserviert werden, zu denen die Zellengruppen in dem DCS gehören.

3. Verfahren nach Anspruch 1 oder 2, wobei das mindestens eine der N Netzelemente zwei beliebige der N Netzelemente außer dem ersten Netzelement als eine Gruppe sind, um eine Verbindung herzustellen; und
die erste Antwortnachricht anzeigt, dass mindestens eine Gruppe von zwei beliebigen der N Netzelemente außer dem ersten Netzelement erfolgreich verbunden ist.

4. Verfahren nach einem der Ansprüche 1 bis 3, wobei das Verfahren vor dem Senden der ersten Anforderungsnachricht durch das erste Netzelement an das zweite Netzelement ferner Folgendes umfasst:
Anfordern, separat eine Verbindung zu mindestens einem der N Netzelemente außer dem ersten Netzelement und dem zweiten Netzelement herzustellen.

5. Verfahren nach Anspruch 1, wobei das erste Netzelement erfolgreich mit dem zweiten Netzelement verbunden wird und das Verfahren ferner Folgendes umfasst:
Anfordern, eine Verbindung zu dem mindestens einen Netzelement herzustellen.

6. Verfahren nach Anspruch 3, wobei das erste Netzelement erfolgreich mit dem zweiten Netzelement verbunden wird und das Verfahren ferner Folgendes umfasst:
Anfordern (S203), separat eine Verbindung zu mindestens einem Netzelement außer dem zweiten Netzelement in der mindestens einen Gruppe von Netzelementen herzustellen, die erfolgreich verbunden sind.

7. Verfahren nach einem der Ansprüche 1 bis 6, wobei zwei beliebige von K Netzelementen erfolgreich verbunden werden, die K Netzelemente das erste Netzelement umfassen, die K Netzelemente zu den N Netzelementen gehören und das Verfahren ferner Folgendes umfasst:
Senden (S204) von DCS-Konfigurationsinformationen an das Endgerät, wobei die DCS-Konfigurationsinformationen eine temporäre Kennung des Mobilfunknetzes, C-RNTI, umfassen, die für das Endgerät durch ein anderes Netzelement in den K Netzelementen außer dem ersten Netzelement konfiguriert worden ist.

8. Verfahren nach Anspruch 7, wobei das Verfahren ferner Folgendes umfasst:
separates Senden, an das andere Netzelement in den K Netzelementen außer dem ersten Netzelement, einer zweiten Benachrichtigungsnachricht, die verwendet wird, um die Löschung eines vierten Netzelements anzuzeigen, wobei eine vierte Zellengruppe, die durch das vierte Netzelement verwaltet wird, zu dem DCS gehört und die Signalqualität der vierten Zellengruppe unter einem ersten Schwellenwert liegt.

9. Verfahren nach Anspruch 7, wobei das Verfahren ferner Folgendes umfasst:
separates Senden, an das andere Netzelement in den K Netzelementen außer dem ersten Netzelement, einer zweiten Benachrichtigungsnachricht, die verwendet wird, um die Herstellung einer Verbindung zu einem vierten Netzelement anzuzeigen, wobei eine vierte Zellengruppe, die durch das vierte Netzelement verwaltet wird, nicht zu dem DCS gehört und eine Signalqualität der vierten Zellengruppe über einem ersten Schwellenwert liegt oder gleich diesem ist.

10. Verfahren nach Anspruch 7, wobei das Verfahren ferner Folgendes umfasst:
Senden, an ein drittes Netzelement, einer zweiten Benachrichtigungsnachricht, die verwendet wird, um über die Löschung eines vierten Netzelements zu benachrichtigen, wobei das dritte Netzelement ein beliebiges der K Netzelemente außer dem ersten Netzelement ist, eine vierte Zellengruppe, die durch das vierte Netzelement verwaltet wird, zu dem DCS gehört, eine Signalqualität der vierten Zellengruppe unter einem ersten Schwellenwert liegt und die zweite Benachrichtigungsnachricht dem dritten Netzelement ferner anzeigt, separat an ein anderes Netzelement in den K Netzelementen außer dem ersten Netzelement und dem dritten Netzelement eine dritte Benachrichtigungsnachricht zu senden, die verwendet wird, um über die Löschung des vierten Netzelements zu benachrichtigen.

11. Verfahren nach Anspruch 7, wobei das Verfahren ferner Folgendes umfasst:
Senden, an ein drittes Netzelement, einer zweiten Benachrichtigungsnachricht, die verwendet wird, um die Herstellung einer Verbindung zu einem vierten Netzelement anzuzeigen, wobei das dritte Netzelement ein beliebiges der K Netzelemente außer dem ersten Netzelement ist, eine vierte Zellengruppe, die durch das vierte Netzelement verwaltet wird, nicht zu dem DCS gehört, eine Signalqualität der vierten Zellengruppe über einem ersten Schwellenwert liegt oder gleich diesem ist und die zweite Benachrichtigungsnachricht dem dritten Netzelement ferner anzeigt, separat an ein anderes Netzelement in den K Netzelementen außer dem ersten Netzelement und dem dritten Netzelement eine dritte Benachrichtigungsnachricht zu senden, die verwendet wird, um die Herstellung einer Verbindung zu dem vierten Netzelement anzuzeigen.

12. Verfahren nach einem der Ansprüche 7 bis 11, wobei das Verfahren ferner Folgendes umfasst:
Senden, an ein Kernnetzelement, von Kenninformationen der Zellengruppe, die in dem DCS umfasst ist, oder von ersten DCS-Anzeigeinformationen, wobei die ersten DCS-Anzeigeinformationen dem Kernnetzelement anzeigen, eine Verbindung zu dem ersten Netzelement aufrechtzuerhalten, wenn das Endgerät zwischen den Zellengruppen, die in dem DCS umfasst sind, übergeben wird; und die ersten DCS-Anzeigeinformationen dem Kernnetzelement anzeigen, wenn das Endgerät zwischen den Zellengruppen, die in dem DCS umfasst sind, übergeben wird, eine Verbindung zu dem Netzelement aufrechtzuerhalten, zu dem die Zellengruppe, die in dem DCS umfasst ist, gehört.

13. Erstes Netzelement, wobei das erste Netzelement einen Prozessor und einen Speicher umfasst; und der Speicher Programmanweisungen umfasst und, wenn die Programmanweisungen vom Prozessor ausgeführt werden, das Verfahren gemäß einem der Ansprüche 1 bis 12 durchgeführt wird.

14. Computerlesbares Speichermedium, umfassend Computeranweisungen und, wenn die Computeranweisungen auf einem ersten Netzelement ausgeführt werden, es dem ersten Netzelement ermöglicht wird, das Verfahren nach einem der Ansprüche 1 bis 12 durchzuführen.

## Revendications

1. Procédé de configuration d'un ensemble de cellules dynamiques, appliqué à un premier élément de réseau, dans lequel l'ensemble de cellules dynamiques est un ensemble d'au moins deux cellules ou groupes de cellules, des stations de base auxquelles toutes les cellules du groupe de cellules dynamiques appartiennent réservent des informations contextuelles d'un terminal, une seule cellule de l'ensemble de cellules dynamiques est activée à chaque fois, la signalisation et/ou des données relatives au terminal sont envoyées uniquement à une station de base à laquelle la cellule activée appartient et la cellule activée est appelée cellule de desserte du terminal, dans lequel le procédé comprend :
l'envoi (S201) d'un premier message de demande à un deuxième élément de réseau, dans lequel le premier message de demande est utilisé pour demander l'établissement d'une connexion au deuxième élément de réseau, et un premier groupe de cellules géré par le premier élément de réseau et un second groupe de cellules géré par le deuxième élément de réseau appartiennent à un ensemble de cellules candidates d'un ensemble de cellules dynamique, DCS ; et
la réception (S202) d'un premier message de réponse en réponse au premier message de demande,
dans lequel le premier message de demande indique également au deuxième élément de réseau d'établir une connexion à au moins l'un des N éléments de réseau autre que le premier élément de réseau, N groupes de cellules gérés par les N éléments de réseau appartiennent à l'ensemble de cellules candidates, et N est un entier supérieur à 2 ; et
le premier message de réponse indique que le deuxième élément de réseau est connecté avec succès à l'au moins un des N éléments de réseau autre que le premier élément de réseau.

2. Procédé selon la revendication 1, dans lequel lorsqu'un terminal est transféré entre des groupes de cellules compris dans le DCS, des informations contextuelles du terminal sont réservées séparément sur des éléments de réseau auxquels les groupes de cellules dans le DCS appartiennent.

3. Procédé selon la revendication 1 ou 2, dans lequel l'au moins un des N éléments de réseau est deux quelconques des N éléments de réseau autres que le premier élément de réseau, formant un groupe pour établir une connexion ; et
le premier message de réponse indique qu'au moins un groupe de deux quelconques des N éléments de réseau autres que le premier élément de réseau est connecté avec succès.

4. Procédé selon l'une des revendications 1 à 3, dans lequel avant que le premier élément de réseau envoie le premier message de demande au deuxième élément de réseau, le procédé comprend également :
la demande d'établissement séparé d'une connexion à au moins l'un des N éléments de réseau autre que le premier élément de réseau et le deuxième élément de réseau.

5. Procédé selon la revendication 1, dans lequel le premier élément de réseau est connecté avec succès au deuxième élément de réseau, et le procédé comprend également :
la demande d'établissement d'une connexion à l'au moins un élément de réseau.

6. Procédé selon la revendication 3, dans lequel le premier élément de réseau est connecté avec succès au deuxième élément de réseau, et le procédé comprend également :
la demande (S203) d'établissement séparé d'une connexion à au moins un élément de réseau, autre que le deuxième élément de réseau, dans l'au moins un groupe d'éléments de réseau qui sont connectés avec succès.

7. Procédé selon l'une quelconque des revendications 1 à 6, dans lequel deux quelconques des K éléments de réseau sont connectés avec succès, les K éléments de réseau comprennent le premier élément de réseau, les K éléments de réseau appartiennent aux N éléments de réseau, et le procédé comprend également :
l'envoi (S204) d'informations de configuration DCS au terminal, dans lequel les informations de configuration DCS comprennent un identifiant temporaire de réseau radio cellulaire, C-RNTI, configuré pour le terminal par un autre élément de réseau dans les K éléments de réseau autre que le premier élément de réseau.

8. Procédé selon la revendication 7, dans lequel le procédé comprend également :
l'envoi séparé, à l'autre élément de réseau dans les K éléments de réseau autre que le premier élément de réseau, d'un deuxième message de notification utilisé pour indiquer la suppression d'un quatrième élément de réseau, dans lequel un quatrième groupe de cellules géré par le quatrième élément de réseau appartient au DCS, et la qualité du signal du quatrième groupe de cellules est inférieure à un premier seuil.

9. Procédé selon la revendication 7, dans lequel le procédé comprend également :
l'envoi séparé, à l'autre élément de réseau dans les K éléments de réseau autre que le premier élément de réseau, d'un deuxième message de notification utilisé pour indiquer l'établissement d'une connexion à un quatrième élément de réseau, dans lequel un quatrième groupe de cellules géré par le quatrième élément de réseau n'appartient pas au DCS, et la qualité du signal du quatrième groupe de cellules est supérieure ou égale à un premier seuil.

10. Procédé selon la revendication 7, dans lequel le procédé comprend également :
l'envoi, à un troisième élément de réseau, d'un deuxième message de notification utilisé pour notifier la suppression d'un quatrième élément de réseau, dans lequel le troisième élément de réseau est l'un quelconque des K éléments de réseau autre que le premier élément de réseau, un quatrième groupe de cellules géré par le quatrième élément de réseau appartient au DCS, une qualité du signal du quatrième groupe de cellules est inférieure à un premier seuil, et le deuxième message de notification indique également au troisième élément de réseau d'envoyer séparément, à un autre élément de réseau des K éléments de réseau autre que le premier élément de réseau et le troisième élément de réseau, un troisième message de notification utilisé pour notifier la suppression du quatrième élément de réseau.

11. Procédé selon la revendication 7, dans lequel le procédé comprend également :
l'envoi, à un troisième élément de réseau, d'un deuxième message de notification utilisé pour indiquer l'établissement d'une connexion à un quatrième élément de réseau, dans lequel le troisième élément de réseau est l'un quelconque des K éléments de réseau autre que le premier élément de réseau, un quatrième groupe de cellules géré par le quatrième élément de réseau n'appartient pas au DCS, une qualité du signal du quatrième groupe de cellules est supérieure ou égale à un premier seuil, et le deuxième message de notification indique également au troisième élément de réseau d'envoyer séparément, à un autre élément de réseau des K éléments de réseau autre que le premier élément de réseau et le troisième élément de réseau, un troisième message de notification utilisé pour indiquer l'établissement d'une connexion au quatrième élément de réseau.

12. Procédé selon l'une quelconque des revendications 7 à 11, dans lequel le procédé comprend également :
l'envoi, à un élément de réseau central, d'informations d'identification du groupe de cellules compris dans le DCS ou de premières informations d'indication DCS, dans lequel les premières informations d'indication DCS indiquent à l'élément de réseau central de maintenir une connexion au premier élément de réseau lorsque le terminal est transféré entre les groupes de cellules compris dans le DCS ; et
les premières informations d'indication DCS indiquent à l'élément de réseau central de maintenir, lorsque le terminal est transféré entre les groupes de cellules compris dans le DCS, une connexion à l'élément de réseau auquel le groupe de cellules compris dans le DCS appartient.

13. Premier élément de réseau, dans lequel le premier élément de réseau comprend un processeur et une mémoire ; et la mémoire comprend des instructions de programme, et lorsque les instructions de programme sont exécutées par le processeur, le procédé selon l'une quelconque des revendications 1 à 12 est réalisé.

14. Support de stockage lisible par ordinateur, comprenant des instructions informatiques, et lorsque les instructions informatiques sont exécutées sur un premier élément de réseau, le premier élément de réseau est autorisé à réaliser le procédé selon l'une quelconque des revendications 1 à 12.
